# EUROPEAN PATENT SPECIFICATION

(11) **EP 2 098 541 B1**
(45) Date of publication and mention of the grant of the patent: **05.06.2013**
(21) Application number: 07860388.3
(22) Date of filing: 27.12.2007
(51) Int. Cl.: C08C 19/00, C08F 4/54, C08L 15/00

(54) **METHOD FOR PRODUCING MODIFIED CONJUGATED DIENE POLYMER, MODIFIED CONJUGATED DIENE POLYMER, AND RUBBER COMPOSITION**
VERFAHREN ZUR HERSTELLUNG VON MODIFIZIERTEM POLYMER AUF BASIS VON KONJUGIERTEM DIEN, MODIFIZIERTES POLYMER AUF BASIS VON KONJUGIERTEM DIEN UND KAUTSCHUKZUSAMMENSETZUNG
PROCÉDÉ POUR PRODUIRE UN POLYMÈRE DIÈNE CONJUGUÉ MODIFIÉ, POLYMÈRE DIÈNE CONJUGUÉ MODIFIÉ ET COMPOSITION DE CAOUTCHOUC

(30) Priority: 27.12.2006 JP 2006352669
(43) Date of publication of application: 09.09.2009
(73) Proprietor: JSR Corporation, Tokyo 104-8410 (JP)
(72) Inventor: TANAKA, Ryouji, Tokyo 104-8410 (JP); SONE, Takuo, Tokyo 104-8410 (JP); TADAKI, Toshihiro, Tokyo 104-8410 (JP)
(74) Representative: TBK
(86) International application number: PCT/JP2007/075166
(87) International publication number: WO 2008/078814

(56) References cited:
- WO-A-2006/112450
- WO-A1-2007/066651
- JP-A- 05 059 103
- JP-A- 54 040 890
- JP-A- 58 001 709
- JP-A- 2000 034 320
- JP-A- 2001 048 940
- JP-A- 2001 139 633
- JP-A- 2005 036 063
- JP-A- 2005 082 735
- JP-T- 2004 525 232

## Description

### TECHNICAL FIELD

The present invention relates to a method for producing a modified conjugated diene polymer, a modified conjugated diene polymer, a rubber composition, a tire member including the rubber composition, and a tire including the tire member. More particularly, the present invention provides a method for producing a modified conjugated diene polymer that can produce a modified conjugated diene polymer that exhibits low heat build-up, excellent wear resistance, excellent mechanical properties, and reduced cold flow, a modified conjugated diene polymer obtained by the method, a rubber composition including the modified conjugated diene polymer, a tire member including the rubber composition, and a tire including the tire member.

### BACKGROUND ART

A conjugated diene polymer is a polymer that has an industrially important role, and is produced by polymerizing a conjugated diene compound (monomer). Various polymerization catalysts used to polymerize the conjugated diene compound have been proposed. For example, a composite catalyst system that includes a transition metal compound containing a transition metal such as nickel, cobalt, or titanium as the main component has been known. Such a composite catalyst system has been widely and industrially used as a polymerization catalyst for butadiene, isoprene, and the like (see Patent Document 1 and Non-patent Document 1, for example).

A conjugated diene polymer that exhibits high polymerization activity and has a narrow molecular weight distribution can be obtained by utilizing a catalyst system using a neodymium compound and a methylalumoxane (see Patent Documents 2 to 4, for example). However, in order to maintain a sufficient catalytic activity during polymerization and obtain a polymer having a narrow molecular weight distribution, it is necessary to use a large amount of alumoxane as compared with a catalyst system using an organoaluminum compound. This makes it necessary to remove a large amount of metal that remains in the polymer. Moreover, an alumoxane is expensive as compared with an organoaluminum compound, and exhibits poor storage stability and the like due to an increase in cold flow.

A method of modifying a conjugated diene polymer polymerized in the presence of a catalyst system using a methylalumoxane with a hetero three-membered compound, a metal halide compound, a metal carboxylate, or the like to reduce cold flow has been reported (see Patent Documents 5 and 6, for example). A method of producing a modified conjugated diene polymer that includes polymerizing a conjugated diene compound using a specific catalyst to obtain a conjugated diene polymer, and reacting the conjugated diene polymer with two or more specific compounds including an alkoxysilane compound having at least one epoxy group or isocyanate group in the molecule to produce a modified conjugated diene polymer has been proposed (see Patent Document 7, for example).

Patent Document 1: JP-B-37-8198
Patent Document 2: JP-A-6-211916
Patent Document 3: JP-A-6-306113
Patent Document 4: JP-A-8-73515
Patent Document 5: JP-A-10-306113
Patent Document 6: JP-A-11-35633
Patent Document 7: JP-A-2001-139633
Non-patent Document 1: Ind. Eng. Chem., 48, 784 (1956)

WO 2006 112450 discloses a method for producing a modified butadiene wherein diortyltin bisortylmaleate (DOTBOM), used as modifier reacts with the active and of a butadiene polymer having a cis content of 99.02%.

### DISCLOSURE OF THE INVENTION

However, since a high catalyst level is required to suppress cold flow by the method disclosed in Patent Document 5 or 6, the amount of alumoxane cannot be reduced to a practical level. The production method disclosed in Patent Document 7 can suppress cold flow of the resulting modified conjugated diene polymer. However, the modified conjugated diene polymer obtained by the production method disclosed in Patent Document 7 exhibits insufficient low heat build-up (low fuel consumption) and wear resistance that are important characteristics of a rubber composition.

The present invention was conceived in order to solve the above-described problems. An object of the present invention is to provide a method for producing a modified conjugated diene polymer that can produce a modified conjugated diene polymer that exhibits low heat build-up, excellent wear resistance, excellent mechanical properties, and reduced cold flow, a modified conjugated diene polymer obtained by the method, a rubber composition including the modified conjugated diene polymer, a tire member including the rubber composition, and a tire including the tire member.

The inventors of the present invention conducted extensive studies in order to achieve the above object. As a result, the inventors found that the above object can be achieved by reacting a specific compound (hereinafter referred to from time to time as "modifier") with a conjugated diene polymer having a cis-1,4-bond content of 98.5% or more and possessing an active end to introduce the modifier into the active end of the conjugated diene polymer. This finding has led to the completion of the present invention. Specifically, the present invention provides a method for producing a modified conjugated diene polymer, a modified conjugated diene polymer obtained by the method, a rubber composition including the modified conjugated diene polymer, a tire member including the rubber composition, and a tire including the tire member defined below.

[1] A method for producing a modified conjugated diene polymer comprising carrying out a modification reaction that reacts a modifier that includes at least one compound selected from the group consisting of the following components (a) to (g) with a conjugated diene polymer having a cis-1,4-bond content of 99.2% or more and possessing an active end to introduce the modifier into the active end of the conjugated diene polymer to obtain a modified conjugated diene polymer,

the component (a) being an alkoxysilane compound that includes at least one group selected from the group consisting of an epoxy group and an isocyanate group in the molecular structure,

the component (b) being a compound shown by the general formula (1): R¹ₙM¹X₄₋ₙ, the general formula (2): M¹X₄, the general formula (3): M¹X₃, the general formula (4): R¹ₙM¹(R²-COOR³)₄₋ₙ, or the general formula (5): R¹ₙM¹(R²-COR³)₄₋ₙ (wherein R¹ individually represents a hydrocarbon group having 1 to 20 carbon atoms, n represents an integer from 0 to 3, R² individually represents a hydrocarbon group having 1 to 20 carbon atoms, R³ represents a hydrocarbon group having 1 to 20 carbon atoms that may include a carbonyl group or an ester group in the side chain, M¹ represents a tin atom, a silicon atom, a germanium atom, or a phosphorus atom, and X represents a halogen atom),

the component (c) being a compound having a structure shown by the general formula (6): Y=C=Z (wherein Y represents a carbon atom, an oxygen atom, a nitrogen atom, or a sulfur atom, and Z represents an oxygen atom, a nitrogen atom, or a sulfur atom) in the molecular structure,

the component (d) being a compound having a structure shown by the following general formula (7) in the molecular structure,

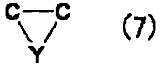

wherein Y represents an oxygen atom, a nitrogen atom, or a sulfur atom,

the component (e) being a halogenated isocyano compound,

the component (f) being a compound shown by the general formula (8): R⁴(COOH)ₘ, the general formula (9): R⁵(COX)ₘ, the general formula (10): R⁶COO-R⁷, the general formula (11): R⁸-OCOO-R⁹, the general formula (12): R¹⁰(COOCO-R¹¹)ₘ, or the following general formula (13),

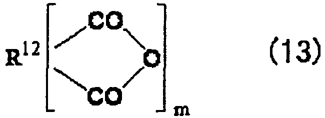

wherein R⁴ to R¹² individually represent hydrocarbon groups having 1 to 50 carbon atoms, X represents a halogen atom, and m represents an integer from 1 to 5 corresponding to the group bonded to the hydrocarbon group represented by R⁴ to R¹², and

the component (g) being a metal carboxylate shown by the general formula (14): R¹³₁M²(OCOR¹⁴)₄₋₁, the general formula (15): R¹⁵₁M²(OCO-R¹⁶-COOR¹⁷)₄₋₁, or the following general formula (16),

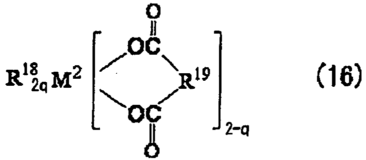

wherein R¹³ to R¹⁹ individually represent hydrocarbon groups having 1 to 20 carbon atoms, M² represents a tin atom, a silicon atom, or a germanium atom, 1 represents an integer from 0 to 3, and q represents 0 or 1.

[2] The method for producing a modified conjugated diene polymer according to [1], wherein the conjugated diene polymer has a ratio (Mw/Mn) of the weight average molecular weight (Mw) to the number average molecular weight (Mn) determined by gel permeation chromatography of 3.5 or less.

[3] The method for producing a modified conjugated diene polymer according to [1] or [2], wherein the conjugated diene polymer has a 1,2-vinyl bond content of 0.5% or less.

[4] The method for producing a modified conjugated diene polymer according to any one of [1] to [3], wherein the conjugated diene polymer includes a repeating unit derived from a monomer selected from the group consisting of 1,3-butadiene, isoprene, and 2,3-dimethyl-1,3-butadiene.

[5] The method for producing a modified conjugated diene polymer according to any one of [1] to [4], wherein the conjugated diene polymer has been polymerized in the presence of a catalyst that includes components (h) to (j) as main components,

the component (h) being a lanthanoid element-containing compound that contains at least one lanthanoid element or a reaction product obtained by reacting the lanthanoid element-containing compound with a Lewis base,
the component (i) being at least one compound selected from an alumoxane and an organoaluminum compound shown by the general formula (17): AlR²⁰R²¹R²² (wherein R²⁰ and R²¹ individually represent a hydrocarbon group having 1 to 10 carbon atoms or a hydrogen atom, and R²² represents a hydrocarbon group having 1 to 10 carbon atoms that is the same as or different from R²⁰ and R²¹), and
the component (j) being an iodine-containing compound that contains at least one iodine atom in the molecular structure.

[6] A modified conjugated diene polymer produced by the method for producing a modified conjugated diene polymer according to any one of [1] to [5].

[7] A rubber composition comprising the modified conjugated diene polymer according to [6] as a rubber component.

[8] The rubber composition according to [7], further comprising at least one of carbon black and silica.

[9] The rubber composition according to [8], wherein the rubber composition contains at least one of carbon black and silica in an amount of 20 to 120 parts by mass based on 100 parts by mass of the rubber component that contains the modified conjugated diene polymer in an amount of 20 mass% or more.

[10] The rubber composition according to any one of [7] to [9], wherein the rubber component includes 20 to 100 mass% of the modified conjugated diene polymer, and 0 to 80 mass% of at least one rubber component selected from the group consisting of a natural rubber, a synthetic isoprene rubber, a butadiene rubber, a styrene-butadiene rubber, an ethylene-α-olefin copolymer rubber, an ethylene-α-olefin-diene copolymer rubber, an acrylonitrile-butadiene copolymer rubber, a chloroprene rubber, and a halogenated butyl rubber (provided that the modified conjugated diene polymer + the rubber component other than the modified conjugated diene polymer = 100 mass%).

[11] A tire member comprising the rubber composition according to any one of [7] to [10].

[12] A tire comprising the tire member according to [11].

According to the present invention, a method for producing a modified conjugated diene polymer that can produce a modified conjugated diene polymer that exhibits excellent wear resistance, excellent mechanical properties, and reduced cold flow, a modified conjugated diene polymer obtained by the method, a rubber composition including the modified conjugated diene polymer, a tire member including the rubber composition, and a tire including the tire member can be provided.

### BEST MODE FOR CARRYING OUT THE INVENTION

The preferred embodiments for carrying out the present invention are described below. However, the present invention is not restricted to the following embodiments and it should be construed that there are also included, in the present invention, those embodiments in which appropriate changes, improvements, etc. have been made to the following embodiments based on the ordinary knowledge possessed by those skilled in the art, as long as there is no deviation from the gist of the present invention.

### [1] Method for producing modified conjugated diene polymer

A method for producing a modified conjugated diene polymer according to the embodiment of the present invention is described below. The method for producing a modified conjugated diene polymer of the present embodiment includes carrying out a modification reaction that reacts a modifier that includes at least one compound selected from the group consisting of the following components (a) to (g) with a conjugated diene polymer having a cis-1,4-bond content of 99.2 % or more and possessing an active end to introduce the modifier into the active end of the conjugated diene polymer to obtain a modified conjugated diene polymer. According to this configuration, the modified conjugated diene polymer that exhibits excellent wear resistance, excellent mechanical properties, and reduced cold flow can be obtained.

Component (a): An alkoxysilane compound that includes at least one group selected from the group consisting of an epoxy group and an isocyanate group in the molecular structure

Component (b): A compound shown by the general formula (1): R¹ₙM¹X₄₋ₙ, the general formula (2): M¹X₄, the general formula (3): M¹X₃, the general formula (4): R¹ₙM¹(R²-COOR³)₄₋ₙ, or the general formula (5): R¹ₙM¹(R²-COR³)₄₋ₙ (wherein R¹ individually represents a hydrocarbon group having 1 to 20 carbon atoms, n represents an integer from 0 to 3, R² individually represents a hydrocarbon group having 1 to 20 carbon atoms, R³ represents a hydrocarbon group having 1 to 20 carbon atoms that may include a carbonyl group or an ester group in the side chain, M¹ represents a tin atom, a silicon atom, a germanium atom, or a phosphorus atom, and X represents a halogen atom)

Component (c): A compound having a structure shown by the general formula (6): Y=C=Z (wherein Y represents a carbon atom, an oxygen atom, a nitrogen atom, or a sulfur atom, and Z represents an oxygen atom, a nitrogen atom, or a sulfur atom) in the molecular structure

Component (d): A compound having a structure shown by the following general formula (7) in the molecular structure

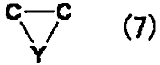

wherein Y represents an oxygen atom, a nitrogen atom, or a sulfur atom.

Component (e): A halogenated isocyano compound

Component (f): A compound shown by the general formula (8): R⁴(COOH)ₘ, the general formula (9): R⁵(COX)ₘ, the general formula (10): R⁶COO-R⁷, the general formula (11): R⁸-OCOO-R⁹, the general formula (12): R¹⁰(COOCO-R¹¹)ₘ, or the following general formula (13)

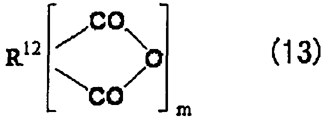

wherein R⁴ to R¹² individually represent hydrocarbon groups having 1 to 50 carbon atoms, X represents a halogen atom, and m represents an integer from 1 to 5 corresponding to the group bonded to the hydrocarbon group represented by R⁴ to R¹².

Component (g): A metal carboxylate shown by the general formula (14): R¹³₁M²(OCOR¹⁴)₄₋₁, the general formula (15): R¹⁵₁M²(OCO-R¹⁶-COOR¹⁷)₄₋₁, or the following general formula (16)

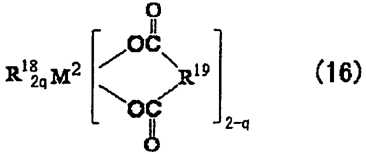

wherein R¹³ to R¹⁹ individually represent hydrocarbon groups having 1 to 20 carbon atoms, M² represents a tin atom, a silicon atom, or a germanium atom, 1 represents an integer from 0 to 3, and q represents 0 or 1.

### [1-1] Conjugated diene polymer

The conjugated diene polymer used in the method for producing a modified conjugated diene polymer of the present embodiment has a cis-1,4-bond content of 99.2% or more and possesses an active end. If the cis-1,4-bond content is below 99.2% a vulcanized rubber produced by vulcanizing a rubber composition that includes the modified conjugated diene polymer may not exhibit low heat build-up and sufficient wear resistance.

As the conjugated diene polymer, a polymer having a repeating unit derived from a monomer selected from the group consisting of 1,3-butadiene, isoprene, 2,3-dimethyl-1,3-butadiene, 1,3-pentadiene, 1,3-hexadiene, and myrcene may be used, for example. It is preferable to use a polymer having a repeating unit derived from a monomer selected from the group consisting of 1,3-butadiene, isoprene, and 2,3-dimethyl-1,3-butadiene.

The conjugated diene polymer may be polymerized in the presence or absence of a solvent. The polymerization solvent may be an inert organic solvent. Examples of the inert organic solvent include saturated aliphatic hydrocarbons having 4 to 10 carbon atoms such as butane, pentane, hexane, and heptane; saturated alicyclic hydrocarbons having 6 to 20 carbon atoms such as cyclopentane and cyclohexane; monoolefins such as 1-butene and 2-butene; aromatic hydrocarbons such as benzene, toluene, and xylene; and halogenated hydrocarbons such as methylene chloride, chloroform, carbon tetrachloride, trichloroethylene, perchloroethylene, 1,2-dichloroethane, chlorobenzene, bromobenzene, and chlorotoluene.

The polymerization reaction temperature when producing the conjugated diene polymer is normally -30°C to 200°C, and preferably 0°C to 150°C. The polymerization reaction may be carried out in an arbitrary manner. The polymerization reaction may be carried out using a batch-type reactor, or may be continuously carried out using an apparatus such as a multistage continuous reactor.

When using a polymerization solvent, the monomer concentration in the solvent is preferably 5 to 50 mass%, and more preferably 7 to 35 mass%. It is preferable to prevent the polymerization system from being contaminated by an inactivating compound such as oxygen, water, or carbon dioxide from the viewpoint of producing the conjugated diene polymer and preventing inactivation of the conjugated diene polymer having an active end.

The conjugated diene polymer having a cis-1,4-bond content of 98.5% or more and possessing an active end can be obtained by polymerizing the conjugated diene compound (monomer) in the presence of a catalyst (catalyst composition) that includes the following components (h) to (j) as the main components, for example.

The term "main component" means that the catalyst may include other components insofar as the physical/chemical characteristics of any of the components (h) to (j) are not impaired to a large extent. In the method for producing a modified conjugated diene polymer of the present embodiment, it is preferable that the total amount of the components (h) to (j) be 50 mass% or more based on the total mass of the catalyst. When the catalyst includes at least one of a conjugated diene compound and a non-conjugated diene compound mentioned below, it is preferable that the total amount of the components (h) to (j) be 90 mass% or more based on the total mass of the catalyst excluding the conjugated diene compound and the non-conjugated diene compound.

Component (h): A lanthanoid element-containing compound that contains at least one lanthanoid element or a reaction product obtained by reacting the lanthanoid element-containing compound with a Lewis base
Component (i): At least one compound selected from an alumoxane and an organoaluminum compound shown by the general formula (17): AlR²⁰R²¹R²² (wherein R²⁰ and R²¹ individually represent a hydrocarbon group having 1 to 10 carbon atoms or a hydrogen atom, and R²² represents a hydrocarbon group having 1 to 10 carbon atoms that is the same as or different from R²⁰ and R²¹)
Component (j): An iodine-containing compound that contains at least one iodine atom in the molecular structure

A conjugated diene polymer having a narrow molecular weight distribution and a high cis-1,4-bond content can be produced by producing (polymerizing) a conjugated diene polymer using such a catalyst (catalyst composition). Moreover, such a catalyst (catalyst composition) is inexpensive as compared with a metallocene catalyst, and does not require a polymerization reaction to be performed at an extremely low temperature. Therefore, such a catalyst (catalyst composition) simplifies the operation and is useful for an industrial production process.

### [1-1a] Component (h)

The component (h) is a lanthanoid element-containing compound that contains at least one of the lanthanoid elements (i.e., the rare earth elements having atomic numbers 57 to 71 in the periodic table) or a reaction product obtained by reacting the lanthanoid element-containing compound with a Lewis base.

Specific examples of the lanthanoid elements include neodymium, praseodymium, cerium, lanthanum, gadolinium, samarium, and the like. Among these, neodymium is preferable. These lanthanoid elements may be used individually or in combination. Specific examples of the lanthanoid element-containing compound include a lanthanoid carboxylate, a lanthanoid alkoxide, a lanthanoid-β-diketone complex, a lanthanoid phosphate, a lanthanoid phosphite. Among these, the carboxylate or the phosphate is preferable, with the carboxylate being more preferable.

Specific examples of the lanthanoid carboxylate include carboxylates shown by the general formula (18): (R²³-CO₂)₃M (wherein M represents a lanthanoid element, and R²³ represents a hydrocarbon group having 1 to 20 carbon atoms).

R²³ in the general formula (18) is preferably a saturated or unsaturated linear, branched, or cyclic alkyl group. The carboxyl group is bonded to a primary, secondary, or tertiary carbon atom. Specific examples include salts of octanoic acid, 2-ethylhexanoic acid, oleic acid, stearic acid, benzoic acid, naphthenic acid, Versatic acid (i.e., a carboxylic acid in which a carboxyl group is bonded to a tertiary carbon atom, manufactured by Shell Chemicals Co., Ltd.). Among these, a salt of 2-ethylhexanoic acid, a salt of naphthenic acid, and a salt of Versatic acid are preferable.

Specific examples of the lanthanoid alkoxide include alkoxides shown by the general formula (19): (R²⁴O)₃M (wherein M represents a lanthanoid element, and R²⁴ represents a hydrocarbon group having 1 to 20 carbon atoms (preferably a saturated or unsaturated linear, branched, or cyclic hydrocarbon group), and the carboxyl group group is bonded to a primary, secondary, or tertiary carbon atom). Specific examples of the alkoxy group represented by "R²⁴O" in the general formula (19) include a 2-ethylhexylalkoxy group, an oleylalkoxy group, a stearylalkoxy group, a phenoxy group, a benzylalkoxy group, and the like. Among these, a 2-ethylhexylalkoxy group and a benzylalkoxy group are preferable.

Specific examples of the lanthanoid-β-diketone complex include an acetylacetone complex, a benzoylacetone complex, a propionitrile acetone complex, a valerylacetone complex, an ethylacetylacetone complex. Among these, an acetylacetone complex and an ethylacetylacetone complex are preferable.

Specific examples of the lanthanoid phosphate or phosphite include lanthanoid salts of bis(2-ethylhexyl)phosphate, bis(1-methylheptyl)phosphate, bis(p-nonylphenyl)phosphate, bis(polyethylene glycol-p-nonylphenyl)phosphate, (1-methylheptyl)(2-ethylhexyl)phosphate, (2-ethylhexyl)(p-nonylphenyl)phosphate, mono-2-ethylhexyl-2-ethylhexylphosphonate, mono-p-nonylphenyl-2-ethylhexylphosphonate, bis(2-ethylhexyl)phosphinate, bis(1-methylheptyl)phosphinate, bis(p-nonylphenyl)phosphinate, (1-methylheptyl)(2-ethylhexyl)phosphinate, (2-ethylhexyl)(p-nonylphenyl)phosphinate, and the like. Among these, salts of bis(2-ethylhexyl)phosphate, bis(1-methylheptyl)phosphate, mono-2-ethylhexyl-2-ethylhexyl phosphonate, and bis(2-ethylhexyl) phosphinate are preferable.

As the lanthanoid element-containing compound, the neodymium phosphate or the neodymium carboxylate are preferable, with the neodymium carboxylate such as neodymium 2-ethylhexatate and neodymium versatate being particularly preferable.

In order to solubilize the lanthanoid element-containing compound in a solvent or stably store the lanthanoid element-containing compound for a long period of time, it is also preferable to mix the lanthanoid element-containing compound with a Lewis base, or use a reaction product obtained by reacting the lanthanoid element-containing compound with a Lewis base. The amount of Lewis base is preferably 0 to 30 mol, and more preferably 1 to 10 mol, based on 1 mol of the lanthanoid element. Specific examples of the Lewis base include acetylacetone, tetrahydrofuran, pyridine, N,N-dimethylformamide, thiophene, diphenyl ether, triethylamine, an organic phosphorous compound, a monohydric or dihydric alcohol, and the like. The component (h) may be used individually or in combination.

### [1-1b] Component (i)

The component (i) is at least one compound selected from an alumoxane and an organoaluminum compound shown by the general formula (17): AlR²⁰R²¹R²² (wherein R²⁰ and R²¹ individually represent a hydrocarbon group having 1 to 10 carbon atoms or a hydrogen atom, and R²² represents a hydrocarbon group having 1 to 10 carbon atoms that is the same as or different from R²⁰ and R²¹).

The alumoxane (aluminoxane) is a compound having a structure shown by the following formula (20) or (21). The alumoxane may be an alumoxane association product disclosed in Fine Chemicals, 23 (9), 5 (1994), J. Am. Chem. Soc., 115, 4971 (1993) and J. Am. Chem. Soc., 117, 6465 (1995).

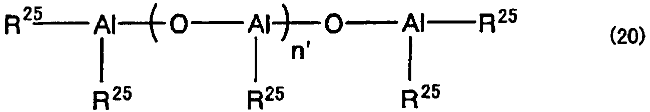

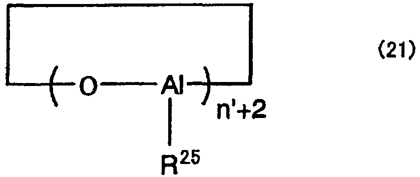

In the general formulas (20) and (21), R²⁵ represents a hydrocarbon group having 1 to 20 carbon atoms, and n' represents an integer equal to or larger than two. Specific examples of the hydrocarbon group represented by R²⁵ include a methyl group, an ethyl group, a propyl group, a butyl group, an isobutyl group, a t-butyl group, a hexyl group, an isohexyl group, an octyl group, an isooctyl group. Among these, a methyl group, an ethyl group, an isobutyl group, and a t-butyl group are preferable, with a methyl group being more preferable. In the general formulas (20) and (21), n' is preferably an integer from 4 to 100.

Specific examples of the alumoxane include methylalumoxane (MAO), ethylalumoxane, n-propylalumoxane, n-butylalumoxane, isobutylalumoxane, t-butylalumoxane, hexylalumoxane, isohexylalumoxane.

The alumoxane may be produced by a known method. For example, the alumoxane may be produced by adding a trialkylaluminum or a dialkylaluminum monochloride to an organic solvent such as benzene, toluene, or xylene, adding water, steam, steam-containing nitrogen gas, or a salt containing crystal water such as copper sulfate pentahydrate or aluminum sulfate hexadecahydrate, and reacting the mixture. These alumoxanes may be used individually or in combination.

Specific examples of the organoaluminum compound shown by the general formula (17) include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum, hydrogenated diethylaluminum, hydrogenated di-n-propylaluminum, hydrogenated di-n-butylaluminum, hydrogenated diisobutylaluminum, hydrogenated dihexylaluminum, hydrogenated diisohexylaluminum, hydrogenated dioctylaluminum, hydrogenated diisooctylaluminum, ethylaluminum dihydride, n-propylaluminum dihydride, isobutylaluminum dihydride.

Among these, triethylaluminum, triisobutylaluminum, hydrogenated diethylaluminum, hydrogenated diisobutylaluminum, are preferable. These organoaluminum compounds may be used individually or in combination.

### [1-1c] Component (j)

The component (j) is an iodine-containing compound that contains at least one iodine atom in the molecular structure. The conjugated diene polymer having a cis-1,4-bond content of 99,2% or more can be easily obtained by utilizing the iodine-containing compound.

The iodine-containing compound is not particularly limited insofar as the compound contains at least one iodine atom in the molecular structure. Examples of the iodine-containing compound include trimethylsilyl iodide, diethylaluminum iodide, methyl iodide, butyl iodide, hexyl iodide, octyl iodide, iodoform, methylene iodide, iodine, benzylidene iodide, beryllium iodide, magnesium iodide, calcium iodide, barium iodide, zinc iodide, cadmium iodide, mercury iodide, manganese iodide, rhenium iodide, copper iodide, silver iodide, gold iodide.

The iodine-containing compound is preferably a silicon iodide compound shown by the general formula (22): R²⁶ₙSiI₄₋ₙ (wherein R²⁶ represents a hydrocarbon group having 1 to 20 carbon atoms or a hydrogen atom, and n represents an integer from 0 to 3), a hydrocarbon iodide compound shown by the general formula (23): R²⁷ₙI₄₋ₙ (wherein R²⁷ represents a hydrocarbon group having 1 to 20 carbon atoms, and n represents an integer from 1 to 3), or iodine. Since the silicon iodide compound, the hydrocarbon iodide compound, or iodine has excellent solubility in an organic solvent, the operation is simplified so that industrial production is facilitated.

Specific examples of the silicon iodide compound (i.e., the compound shown by the general formula (22)) include trimethylsilyl iodide, triethylsilyl iodide, dimethylsilyl iodide. Among these, trimethylsilyl iodide is preferable. Specific examples of the hydrocarbon iodide compound (i.e., the compound shown by the general formula (23)) include methyl iodide, butyl iodide, hexyl iodide, octyl iodide, iodoform, methylene iodide, iodine, benzylidene iodide. Among these, methyl iodide, iodoform, methylene iodide, and iodine are preferable.

These iodine-containing compounds may be used either individually or in combination.

The mixing ratio of each component (components (h) to (j)) used as the main components of the catalyst may be appropriately set. The component (h) is preferably used in an amount of 0.00001 to 1.0 mmol, and more preferably 0.0001 to 0.5 mmol, based on 100 g of the conjugated diene compound. If the amount of the component (h) is below 0.00001 mmol, the polymerization activity may decrease. If exceeding 1.0 mmol, a deashing step may be required due to an increase in catalyst concentration.

When using the alumoxane as the component (i), a preferable amount of the alumoxane contained in the catalyst may be indicated by the molar ratio of the component (h) to aluminum (Al) contained in the alumoxane. Specifically, the molar ratio of the component (h) to aluminum (Al) contained in the alumoxane is preferably 1:1 to 1:500, more preferably 1:3 to 1:250, and particularly preferably 1:5 to 1:200. If the molar ratio is outside the above range, the catalytic activity may decrease, or a step of removing the catalyst residue may be necessary.

When using the organoaluminum compound as the component (i), a preferable amount of the organoaluminum compound contained in the catalyst composition may be indicated by the molar ratio of the component (h) to the organoaluminum compound. Specifically, the molar ratio of the component (h) to the organoaluminum compound is preferably 1:1 to 1:700, and more preferably 1:3 to 1:500. If the molar ratio is outside the above range, the catalytic activity may decrease, or a step of removing the catalyst residue may be necessary.

On the other hand, a preferable amount of the component (j) contained in the catalyst composition may be indicated by the molar ratio of the iodine atom contained in the component (j) to the component (h). Specifically, the molar ratio of the iodine atom to the component (h) is preferably 0:5 to 3, more preferably 1 to 2.5, and particularly preferably 1.2 to 1.8. If the molar ratio of the iodine atom to the component (h) is below 0.5, the polymerization catalytic activity may decrease. If the molar ratio of the iodine atom to the component (h) is exceeding 3, the component (h) may act as a poison.

The catalyst preferably includes at least one of a conjugated diene compound and a non-conjugated diene compound in addition to the components (h) to (j) in an amount of 1000 mol or less, more preferably 150 to 1000 mol, and particularly preferably 3 to 300 mol, based on 1 mol of the component (h).

The catalytic activity is further improved by adding at least one of the conjugated diene compound and the non-conjugated diene compound to the catalyst composition. Examples of the conjugated diene compound added to the catalyst include 1,3-butadiene, isoprene, and the like. Examples of the non-conjugated diene compound include divinylbenzene, diisopropenylbenzene, triisopropenylbenzene, 1,4-vinylhexadiene, ethylidenenorbornene.

### [1-1d] Preparation of catalyst (catalyst composition)

The catalyst (catalyst composition) used in the method for producing a conjugated diene polymer of the present embodiment may be prepared by reacting the components (h) to (j) dissolved in a solvent optionally together with at least one of the conjugated diene compound and the non-conjugated diene compound, for example.

Each component may be added in an arbitrary order. Note that it is preferable to previously mix and react each component and age the reaction product in order to improve the catalytic activity and reduce the polymerization initiation induction period.

The aging temperature is preferably 0 to 100°C, and more preferably 20 to 80°C. If the aging temperature is below 0°C, aging may be insufficient. If the aging temperature is exceeding 100°C, the catalytic activity may decrease, or the molecular weight distribution may broaden. The aging time is not particularly limited. The components may be caused to come in contact in a line before adding the components to a polymerization reactor. The aging time is normally 0.5 minutes or more. The catalyst composition thus prepared is stable for several days.

In the method for producing a modified conjugated diene polymer of the present invention, it is preferable to use a conjugated diene polymer having a ratio (Mw/Mn) of the weight average molecular weight (Mw) to the number average molecular weight (Mn) determined by gel permeation chromatography of 3.5 or less. The vinyl bond content and the cis-1,4 bond content of the conjugated diene polymer can be easily adjusted by controlling the polymerization temperature. The ratio Mw/Mn of the conjugated diene polymer can be easily adjusted by controlling the molar ratio of the components (h) to (j).

In the method for producing a modified conjugated diene polymer of the present invention, it is preferable to use a conjugated diene polymer having a 1,2-vinyl bond content of 0.5% or less.

The Mooney viscosity (ML₁₊₄ (100°C)) of the conjugated diene polymer at 100°C is preferably 5 to 50, and more preferably 10 to 40.

If the Mooney viscosity of the conjugated diene polymer is below 5, mechanical characteristics and wear resistance after vulcanization may deteriorate, for example. If the Mooney viscosity of the conjugated diene polymer is exceeding 50, the resulting modified conjugated diene polymer may exhibit inferior processability during kneading. The Mooney viscosity of the conjugated diene polymer can be easily adjusted by controlling the molar ratio of the components (h) to (j).

### [1-2] Modification reaction

In the method for producing a modified conjugated diene polymer of the present embodiment, the modification reaction is carried out by reacting the modifier that includes at least one compound selected from the group consisting of the components (a) to (g) with the conjugated diene polymer having a cis-1,4-bond content of 99.2% or more and possessing an active end. This enables production of a modified conjugated diene polymer that exhibits excellent wear resistance, excellent mechanical properties, and significantly reduced cold flow. The components (a) to (g) used as the modifier are described in detail below.

### [1-2a] Component (a)

The component (a) is an alkoxysilane compound that includes at least one group selected from the group consisting of an epoxy group and an isocyanate group in the molecular structure.

Specific examples of the component (a) include epoxy group-containing alkoxysilane compounds such as 3-glycidyloxypropyltrimethoxysilane,
3-glycidyloxypropyltriethoxysilane, 3-glycidyloxypropyltriphenoxysilane,
(3-glycidyloxypropyl)methyldimethoxysilane,
(3-glycidyloxypropyl)methyldiethoxysilane,
(3-glycidyloxypropyl)methyldiphenoxysilane, a condensate of
(3-glycidyloxypropyl)methyldimethoxysilane, a condensate of
(3-glycidyloxypropyl)methyldiethoxysilane,
β-(3,4-epoxycyclohexyl)ethyltrimethoxysilane, a condensate of
3-glycidyloxypropyltrimethoxysilane, and a condensate of
3-glycidyloxypropyltriethoxysilane.

Further examples of the component (a) include isocyanate group-containing alkoxysilane compounds such as 3-isocyanatopropyltrimethoxysilane,
3-isocyanatopropyltriethoxysilane, 3-isocyanatopropyltriphenoxysilane,
(3-isocyanatopropyl)methyldimethoxysilane, (3-isocyanatopropyl)methyldiethoxysilane,
(3-isocyanatopropyl)methyldiphenoxysilane, a condensate of
(3-isocyanatopropyl)methyldimethoxysilane, a condensate of
(3-isocyanatopropyl)methyldiethoxysilane,
β-(isocyanatocyclohexyl)ethyltrimethoxysilane, a condensate of
(3-isocyanatopropyl)trimethoxysilane, and a condensate of
(3-isocyanatopropyl)triethoxysilane.

### [1-2b] Component (b)

The component (b) is a compound shown by the general formula (I): R¹ₙM¹X₄₋ₙ, the general formula (2): M¹X₄, the general formula (3): M¹X₃, the general formula (4): R¹ₙM¹(R²-COOR³)₄₋ₙ, or the general formula (5): R¹ₙM¹(R²-COR³)₄₋ₙ.

In the general formulas (1), (4), and (5), R¹ individually represents a hydrocarbon group having 1 to 20 carbon atoms, and n represents an integer from 0 to 3. In the general formulas (4) and (5), R² individually represents a hydrocarbon group having 1 to 20 carbon atoms, and R³ represents a hydrocarbon group having 1 to 20 carbon atoms that may include a carbonyl group or an ester group in the side chain. In the general formulas (1) to (5), M¹ represents a tin atom, a silicon atom, a germanium atom, or a phosphorus atom, and X represents a halogen atom.

The compound shown by the general formula (1) is a halogenated organometallic compound. The compound shown by the general formula (2) or (3) is a metal halide compound. The compound shown by the general formula (4) or (5) is an organometallic compound.

Examples of the compounds shown by the general formulas (1) to (3) in which M¹ is a tin atom include halogenated organometallic compounds such as triphenyltin chloride, tributyltin chloride, triisopropyltin chloride, trihexyltin chloride, trioctyltin chloride, diphenyltin dichloride, dibutyltin dichloride, dihexyltin dichloride, dioctyltin dichloride, phenyltin trichloride, butyltin trichloride, and octyltin trichloride, and metal halide compounds such as tin tetrachloride.

Examples of the compounds shown by the general formulas (1) to (3) in which M¹ is a silicon atom include halogenated organometallic compounds such as triphenylchlorosilane, trihexylchlorosilane, trioctylchlorosilane, tributylchlorosilane, trimethylchlorosilane, diphenyldichlorosilane, dihexyldichlorosilane, dioctyldichlorosilane, dibutyldichlorosilane, dimethyldichlorosilane, methyldichlorosilane, phenylchlorosilane, hexyltrichlorosilane, octyltrichlorosilane, butyltrichlorosilane, and methyltrichlorosilane, and metal halide compounds such as silicon tetrachloride.

Examples of the compounds shown by the general formulas (1) to (3) in which M¹ is a germanium atom include halogenated organometallic compounds such as triphenylgermanium chloride, dibutylgermanium dichloride, diphenylgermanium dichloride, and butylgermanium trichloride, and metal halide compounds such as germanium tetrachloride. Examples of the compounds shown by the general formulas (1) to (3) in which M¹ is a phosphorus atom include metal halide compounds such as phosphorus trichloride.

The compound shown by the general formula (4) or (5) used as the component (b) is an organometallic compound that contains an ester group or a carbonyl group in the molecular structure. As the component (b), the organometallic compound, the halogenated organometallic compound, and the metal halide compound may be used in combination in an arbitrary ratio.

### [1-2c] Component (c)

The component (c) is a compound having a structure shown by the general formula (6): Y=C=Z (wherein Y represents a carbon atom, an oxygen atom, a nitrogen atom, or a sulfur atom, and Z represents an oxygen atom, a nitrogen atom, or a sulfur atom) in the molecular structure. Examples of such a compound include heterocumulene compounds.

When Y is a carbon atom and Z is an oxygen atom, the compound is a ketene compound. When Y is a carbon atom and Z is a sulfur atom, the compound is a thioketene compound. When Y is a nitrogen atom and Z is an oxygen atom, the compound is an isocyanate compound. When Y is a nitrogen atom and Z is a sulfur atom, the compound is a thioisocyanate compound. When Y and Z are nitrogen atoms, the compound is a carbodiimide compound. When Y and Z are oxygen atoms, the compound is carbon dioxide. When Y and Z are nitrogen atoms, the compound is carbonyl sulfide. When Y and Z are sulfur atoms, the compound is carbon disulfide. Note that the component (c) is not limited to the above combinations.

Examples of the ketene compound include ethyl ketene, butyl ketene, phenyl ketene, tolyl ketene. Examples of the thioketene compound include ethyl thioketene, butyl thioketene, phenyl thioketene, tolyl thioketene.

Examples of the isocyanate compound include phenyl isocyanate, 2,4-tolylene diisocyanate, 2,6-tolylene diisocyanate, diphenylmethane diisocyanate, polymeric-type diphenylmethane diisocyanate, hexamethylene diisocyanate, and the like.

Examples of the thioisocyanate compound include phenyl thioisocyanate, 2,4-tolylene dithioisocyanate, hexamethylene dithioisocyanate. Examples of the carbodiimide compound include N,N'-diphenylcarbodiimide, N,N'-diethylcarbodiimide.

### [1-2d] Component (d)

The component (d) is a compound having a structure shown by the following general formula (7) in the molecular structure other than the component (a). Examples of such a compound include hetero three-membered cyclic compounds.

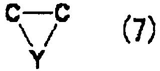

wherein Y represents an oxygen atom, a nitrogen atom, or a sulfur atom.

When Y is an oxygen atom, the compound is an epoxy compound. When Y is a nitrogen atom, the compound is an ethyleneimine derivative. When Y is a sulfur atom, the compound is a thiirane compound.

Examples of the epoxy compound include ethylene oxide, propylene oxide, cyclohexene oxide, styrene oxide, epoxidized soybean oil, epoxidized natural rubber, butyl glycidyl ether, phenyl glycidyl ether, 2-ethylhexyl glycidyl ether, allyl glycidyl ether, ethylene glycol diglycidyl ether, neopentyl glycol diglycidyl ether, trimethylolpropane polyglycidyl ether, glycerol polyglycidyl ether, polypropylene glycol diglycidyl ether, polyethylene glycol diglycidyl ether, sorbitol polyglycidyl ether, glycidyl methacrylate, glycidyl acrylate, N,N-diglycidylaniline, N,N-diglycidyltoluidine, N,N-diglycidyloxyaniline, tetraglycidylaminodiphenylmethane.

Examples of the ethyleneimine derivative include ethyleneimine, propyleneimine, N-phenylethyleneimine, N-(β-cyanoethyl)ethyleneimine, and the like. Examples of the thiirane compound include thiirane, methylthiirane, phenylthiirane, and the like.

### [1-2e] Component (e)

The component (e) is a halogenated isocyano compound. The halogenated isocyano compound is a compound having a structure shown by the general formula (24): N=C-X (wherein X represents a halogen atom).

Examples of the halogenated isocyano compound that is the component (e) include 2-amino-6-chloropyridine, 2,5-dibromopyridine, 4-chloro-2-phenylquinazoline, 2,4,5-tribromoimidazole, 3,6-dichloro-4-methylpyridazine, 3,4,5-trichloropyridazine, 4-amino-6-chloro-2-mercaptopyrimidine, 2-amino-4-chloro-6-methylprimidine, 2-amino-4,6-dichloropyrimidine, 6-chloro-2,4-dimethoxypyrimidine, 2-chloropyrimidine, 2,4-dichloro-6-methylpyrimidine,
4,6-dichloro-2-(methylthio)pyrimidine, 2,4,5,6-tetrachloropyrimidine, 2,4,6-trichloropyrimidine, 2-amino-6-chloropyrazine, 2,6-dichloropyrazine, 2,4-bis(methylthio)-6-chloro-1,3,5-triazine, 2,4,6-trichloro-1,3,5-triazine, 2-bromo-5-nitrothiazole, 2-chlorobenzothiazole, 2-chlorobenzoxazole.

### [1-2f] Component (f)

The component (f) is a compound shown by the general formula (8): R⁴(COOH)ₘ, the general formula (9): R⁵(COX)ₘ, the general formula (10): R⁶COO-R⁷, the general formula (11): R⁸-OCOO-R⁹, the general formula (12): R¹⁰(COOCO-R¹¹)ₘ, or the following general formula (13).

In the general formulas (8) to (13), R⁴ to R¹² individually represent hydrocarbon groups having 1 to 50 carbon atoms. In the general formula (9), X represents a halogen atom. In the general formulas (8), (9), (12), (13), m represents an integer from 1 to 5 corresponding to the group bonded to the hydrocarbon group represented by R⁴ to R¹².

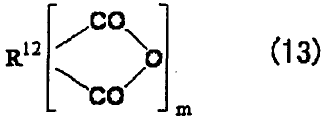

The compound shown by the general formula (8) is a carboxylic acid. The compound shown by the general formula (9) is an acid halide. The compound shown by the general formula (10) is an ester compound. The compound shown by the general formula (11) is a carbonate compound. The compound shown by the general formula (12) or (13) is an acid anhydride.

Examples of the compound (carboxylic acid) shown by the general formula (8) include acetic acid, stearic acid, adipic acid, maleic acid, benzoic acid, acrylic acid, methacrylic acid, phthalic acid, isophthalic acid, terephthalic acid, trimellitic acid, pyromellitic acid, mellitic acid, a hydrolysate or a partial hydrolysate of a polymethacrylate compound or a polyacrylic acid compound.

Examples of the compound (acid halide) shown by the general formula (9) include acetyl chloride, propionic acid chloride, butanoic acid chloride, isobutanoic acid chloride, octanoic acid chloride, acrylic acid chloride, benzoic acid chloride, stearic acid chloride, phthalic acid chloride, maleic acid chloride, oxalic acid chloride, acetyl iodide, benzoyl iodide, acetyl fluoride, benzoyl fluoride.

Examples of the compound (ester compound) shown by the general formula (10) include ethyl acetate, ethyl stearate, diethyl adipate, diethyl maleate, methyl benzoate, ethyl acrylate, ethyl methacrylate, diethyl phthalate, dimethyl terephthalate, tributyl trimellitate, tetraoctyl pyromellitate, hexaethyl mellitate, phenyl acetate, poly(methyl methacrylate), poly(ethyl acrylate), poly(isobutyl acrylate).

Examples of the compound (carbonate compound) shown by the general formula (12) include dimethyl carbonate, diethyl carbonate, dipropyl carbonate, dihexyl carbonate, diphenyl carbonate.

Examples of the compound (acid anhydride) shown by the general formula (12) include acetic anhydride, propionic anhydride, isobutyric anhydride, isovaleric anhydride, heptanoic anhydride, benzoic anhydride, cinnamic anhydride.

The compound mentioned as the component (f) may include an aprotic polar group such as an ether group or a tertiary amino group in the coupling agent molecule insofar as the object of the present invention is not impaired. The component (f) may be used either individually or in combination. The component (f) may include a compound including a free alcohol group or phenol group as impurities.

### [1-2g] Component (g)

The component (g) is a metal carboxylate shown by the general formula (14): R¹³₁M²(OCOR¹⁴)₄₋₁, the general formula (15): R¹⁵₁M²(OCO-R¹⁶-COOR¹⁷)₄₋₁, or the following general formula (16).

In the general formulas (14) to (16), R¹³ to R¹⁹ individually represent hydrocarbon groups having 1 to 20 carbon atoms, M² represents a tin atom, a silicon atom, or a germanium atom, 1 represents an integer from 0 to 3, and q represents 0 or 1. The compounds shown by the general formulas (14) to (16) are metal carboxylates.

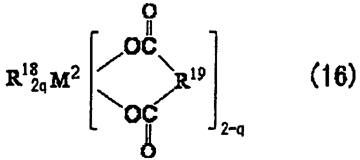

Examples of the compounds shown by the general formula (14) include triphenyltin laurate, triphenyltin 2-ethylhexatate, triphenyltin naphthate, triphenyltin acetate, triphenyltin acrylate, tri-n-butyltin laurate, tri-n-butyltin 2-ethylhexatate, tri-n-butyltin naphthate, tri-n-butyltin acetate, tri-n-butyltin acrylate, tri-t-butyltin laurate, tri-t-butyltin 2-ethylhexatate, tri-t-butyltin naphthate, tri-t-butyltin acetate; tri-t-butyltin acrylate, triisobutyltin laurate, triisobutyltin 2-ethylhexatate, triisobutyltin naphthate, triisobutyltin acetate, triisobutyltin acrylate,

triisopropyltin laurate, triisopropyltin 2-ethylhexatate, triisopropyltin naphthate, triisopropyltin acetate, triisopropyltin acrylate, trihexyltin laurate, trihexyltin 2-ethylhexatate, trihexyltin acetate, trihexyltin acrylate, trioctyltin laurate, trioctyltin 2-ethylhexatate, trioctyltin naphthate, trioctyltin acetate, trioctyltin acrylate, tri-2-ethylhexyltin laurate, tri-2-ethylhexyltin 2-ethylhexatate, tri-2-ethylhexyltin naphthate, tri-2-ethylhexyltin acetate, tri-2-ethylhexyltin acrylate.

Examples of the compounds shown by the general formula (14) also include tristearyltin laurate, tristearyltin 2-ethylhexatate, tristearyltin naphthate, tristearyltin acetate, tristearyltin acrylate, tribenzyltin laurate, tribenzyltin 2-ethylhexatate, tribenzyltin naphthate, tribenzyltin acetate, tribenzyltin acrylate, diphenyltin dilaurate, diphenyltin di-2-ethylhexatate, diphenyltin distearate, diphenyltin dinaphthate, diphenyltin diacetate, diphenyltin diacrylate.

Examples of the compounds shown by the general formula (14) also include di-n-butyltin dilaurate, di-n-butyltin di-2-ethylhexatate, di-n-butyltin distearate, di-n-butyltin dinaphthate, di-n-butyltin diacetate, di-n-butyltin diacrylate, di-t-butyltin dilaurate, di-t-butyltin di-2-ethylhexatate, di-t-butyltin distearate, di-t-butyltin dinaphthate, di-t-butyltin diacetate, di-t-butyltin diacrylate, diisobutyltin dilaurate, diisobutyltin di-2-ethylhexatate, diisobutyltin distearate, diisobutyltin dinaphthate, diisobutyltin diacetate, diisobutyltin diacrylate,

diisopropyltin dilaurate, diisopropyltin di-2-ethylhexatate, diisopropyltin distearate, diisopropyltin dinaphthate, diisopropyltin diacetate, diisopropyltin diacrylate, dihexyltin dilaurate, dihexyltin di-2-ethylhexatate, dihexyltin distearate, dihexyltin dinaphthate, dihexyltin diacetate, dihexyltin diacrylate, di-2-ethylhexyltin dilaurate, di-2-ethylhexyltin di-2-ethylhexatate, di-2-ethylhexyltin distearate, di-2-ethylhexyltin dinaphthate, di-2-ethylhexyltin diacetate, di-2-ethylhexyltin diacrylate, dioctyltin dilaurate, dioctyltin di-2-ethylhexatate, dioctyltin distearate, dioctyltin dinaphthate, dioctyltin diacetate, dioctyltin diacrylate.

Examples of the compounds shown by the general formula (14) also include distearyltin dilaurate, distearyltin di-2-ethylhexatate, distearyltin distearate, distearyltin dinaphthate, distearyltin diacetate, distearyltin diacrylate, dibenzyltin dilaurate, dibenzyltin di-2-ethylhexatate, dibenzyltin distearate, dibenzyltin dinaphthate, dibenzyltin diacetate, dibenzyltin diacrylate, phenyltin trilaurate, phenyltin tri-2-ethylhexatate, phenyltin trinaphthate, phenyltin triacetate, phenyltin triacylate.

Further examples of the compounds shown by the general formula (14) include n-butyltin trilaurate, n-butyltin tri-2-ethylhexatate, n-butyltin trinaphthate, n-butyltin triacetate, n-butyltin triacylate, t-butyltin trilaurate, t-butyltin tri-2-ethylhexatate, t-butyltin trinaphthate, t-butyltin triacetate, t-butyltin triacylate, isobutyltin trilaurate, isobutyltin tri-2-ethylhexatate, isobutyltin trinaphthate, isobutyltin triacetate, isobutyltin triacylate, isopropyltin trilaurate, isopropyltin tri-2-ethylhexatate, isopropyltin trinaphthate, isopropyltin triacetate, isopropyl tintriacylate,

hexyltin trilaurate, hexyltin tri-2-ethylhexatate, hexyltin trinaphthate, hexyltin triacetate, hexyltin triacylate, octyltin trilaurate, octyltin tri-2-ethylhexatate, octyltin trinaphthate, octyltin triacetate, octyltin triacylate, 2-ethylhexyltin trilaurate, 2-ethylhexyltin tri-2-ethylhexatate, 2-ethylhexyltin trinaphthate, 2-ethylhexyltin triacetate, 2-ethylhexyltin triacylate, stearyltin trilaurate, stearyltin tri-2-ethylhexatate, stearyltin trinaphthate, stearyltin triacetate, stearyltin triacylate, benzyltin trilaurate, benzyltin tri-2-ethylhexatate, benzyltin trinaphthate, benzyltin triacetate, benzyltin triacylate.

Examples of the compounds shown by the general formula (15) include diphenyltin bismethylmaleate, diphenyltin bis-2-ethylhexylmaleate, diphenyltin bisoctylmaleate, diphenyltin bisbenzylmaleate, di-n-butyltin bismethylmaleate, din-butyltin ethylhexylmaleate, di-n-butyltin bisoctylmaleate, di-n-butyltin bisbenzylmaleate, di-t-butyltin bismethylmaleate, di-t-butyltin bis-2-ethylhexylmaleate, di-t-butyltin bisoctylmaleate, di-t-butyltin bisbenzylmaleate, diisobutyltin bismethylmalate, diisobutyltin bis-2-ethylhexylmaleate, diisobutyltin bisoctylmaleate, diisobutyltin bisbenzylmaleate, diisopropyltin bismethylmalate, diisopropyltin bis-2-ethylhexylmaleate, diisopropyltin bisoctylmaleate, diisopropyltin bisbenzylmaleate.

Examples of the compounds shown by the general formula (15) also include dihexyltin bismethylmalate, dihexyltin bis-2-ethylhexylmaleate, dihexyltin bisoctylmaleate, dihexyltin bisbenzylmaleate, di-2-ethylhexyltin bismethylmalate, di-2-ethylhexyltin bis-2-thylhexylmaleate, di-2-ethylhexyltin bisoctylmaleate, di-2-ethylhexyltin bisbenzylmaleate, dioctyltin bismethylmalate, dioctyltin bis-2-ethylhexylmaleate, dioctyltin bisoctylmaleate, dioctyltin bisbenzylmaleate.

Examples of the compounds shown by the general formula (15) also include distearyltin bismethylmalate, distearyltin bis-2-ethylhexylmaleate, distearyltin bisoctylmaleate, distearyltin bisbenzylmaleate, dibenzyltin bismethylmalate, dibenzyltin bis-2-thylhexylmaleate, dibenzyltin bisoctylmaleate, dibenzyltin bisbenzylmaleate, diphenyltin bismethyladipate, diphenyltin bis-2-ethylhexyladipate, diphenyltin bisoctyladipate, diphenyltin bisbenzyladipate.

Examples of the compounds shown by the general formula (15) also include di-n-butyltin bismethyladipate, di-n-butyltin bis-ethylhexyladipate, di-n-butyltin bisoctyladipate, di-n-butyltin bisbenzyladipate, di-t-butyltin bismethyladipate, di-t-butyltin bis-2-ethylhexyladipate, di-t-butyltin bisoctyladipate, di-t-butyltin bisbenzyladipate, diisobutyltin bismethyladipate, diisobutyltin bis-2-ethylhexyladipate, diisobutyltin bisoctyladipate, diisobutyltin bisbenzyladipate, diisopropyltin bismethyladipate, diisopropyltin bis-2-ethylhexyladipate, diisopropyltin bisoctyladipate, diisopropyltin bisbenzyladipate,

dihexyltin bismethyladipate, dihexyltin bis-2-ethylhexyladipate, dihexyltin bismethyladipate, dihexyltin bisbenzyladipate, di-2-ethylhexyltin bismethyladipate, di-2- ethylhexyltin bis-2-ethylhexyladipate, di-2-ethylhexyltin bisoctyladipate, di-2-ethylhexyltin bisbenzyladipate, dioctyltin bismethyladipate, dioctyltin bis-2-ethylhexyladipate, dioctyltin bisoctyladipate, dioctyltin bisbenzyladipate, distearyltin bismethyladipate, distearyltin bis-2-ethylhexyladipate, distearyltin bisoctyladipate, distearyltin bisbenzyladipate, dibenzyltin bismethyladipate, dibenzyltin bis-2-ethylhexyladipate, dibenzyltin bisoctyladipate, dibenzyltin bisbenzyladipate.

Further examples of the compounds shown by the general formula (15) include derivatives of compounds having two carboxylic acid groups (e.g., malonic acid, malic acid, or succinic acid) instead of maleic acid or adipic acid.

Examples of the compounds shown by the general formula (16) include diphenyltin maleate, di-n-butyltin maleate, di-t-butyltin maleate, diisobutyltin maleate, diisopropyltin maleate, dihexyltin maleate, di-2-ethylhexyltin maleate, dioctyltin maleate, distearyltin maleate, dibenzyltin maleate, diphenyltin adipate, di-n-butyltin adipate, di-t-butyltin adipate, diisobutyltin adipate, diisopropyltin adipate, dihexyltin diadipate, di-2-ethylhexyltin adipate, dioctyltin adipate, distearyltin adipate, dibenzyltin adipate.

Further examples of the compounds shown by the general formula (16) include derivatives of compounds having two carboxylic acid groups (e.g., malonic acid, malic acid, or succinic acid) instead of maleic acid or adipic acid.

The compounds as the components (a) to (g) may be used either individually or in combination as the modifier used in the method for producing a modified conjugated diene polymer of the present embodiment. The cold flow of the modified conjugated diene polymer can be reduced by carrying out the modification reaction using the above-mentioned modifier.

In the method for producing a modified conjugated diene polymer of the present embodiment, it is preferable to use the compound as the component (a) together with at least one compound selected from the group consisting of the components (b) to (g) as the modifier. It is more preferable to use the component (a) together with the component (c) or (g).

The cold flow of the modified conjugated diene polymer can be further reduced by such a configuration. When using two or more compounds in combination, the compounds as the components (a) to (g) may be added (reacted) in an arbitrary order.

The modifier is preferably used in an amount of 0.02 to 20 mmol, more preferably 0.1 to 10 mmol, and particularly preferably 0.2 to 5 mmol, based on 100 g of the conjugated diene compound. If the amount of the modifier is below 0.02 mmol, the modification reaction may not sufficiently proceed. Moreover, wear resistance and cold flow may not be improved. If the amount of the modifier is exceeding 20 mmol, the property improvement effect is saturated (i.e., it is uneconomical). Moreover, a toluene insoluble (gel) may by produced.

When using the compound as the component (a) together with at least one compound selected from the group consisting of the components (b) to (g) as the modifier, the ratio of the component (a) to the other component (components (b) to (g)) in the modifier is preferably determined so that the amount of the component (a) is 5 to 90 mol% (remaining component: 10 to 95 mol%), and more preferably 10 to 80 mol% (remaining component: 20 to 90 mol%).

If the amount of the component (a) is below 5 mol%, the cold flow improvement effect may decrease. If the amount of the component (a) is exceeding 90 mol%, the cold flow improvement effect may also decrease. The modification reaction is preferably carried out at 160°C or less, and more preferably -30 to 130°C. The modification reaction time is preferably 0.1 to 10 hours, and more preferably 0.2 to 5 hours.

The modification reaction is preferably carried out via a solution reaction. The solution reaction may be carried out in a solution that contains unreacted monomers used when polymerizing the conjugated diene polymer, for example. The modification reaction may be carried out by an arbitrary method. For example, the modification reaction may be carried out using a batch-type reactor, or may be carried out continuously using a multi-stage continuous reactor, an inline mixer. It is preferable to carry out the modification reaction after completion of the polymerization reaction, but before carrying out operations necessary for solvent removal, a water treatment, a heat treatment, polymer isolation.

After completing the modification reaction, a polymerization terminator and a polymerization stabilizer are optionally added to the reaction system, followed by solvent removal and drying to recover the desired modified conjugated diene polymer.

### [2] Modified conjugated diene polymer

A modified conjugated diene polymer according to the present embodiment of the present invention is produced by the above-described method for producing a modified conjugated diene polymer. In the modified conjugated diene polymer, any of the components (a) to (g) used as the modifier is introduced into the active end of the conjugated diene polymer.

Since the modified conjugated diene polymer of the present embodiment is obtained by subjecting the conjugated diene polymer having a cis-1,4-bond content of 99.2% or more to the modification reaction, the modified conjugated diene polymer also has a cis-1,4-bond content of 99.2% or more.

The Mooney viscosity (ML₁₊₄ (100°C)) of the modified conjugated diene polymer of the present embodiment is preferably 10 to 100, and more preferably 20 to 60. If the Mooney viscosity (ML₁₊₄, 100°C) of the modified conjugated diene polymer is below 10, rubber properties such as fracture properties may deteriorate. If the Mooney viscosity (ML₁₊₄, 100°C) of the modified conjugated diene polymer is exceeding 100, workability may deteriorate so that it may be difficult to knead the modified conjugated diene polymer with additives.

The modified conjugated diene polymer preferably has a ratio (Mw/Mn) of the weight average molecular weight (Mw) to the number average molecular weight (Mn) determined by gel permeation chromatography of 3.5 or less, more preferably 3.0 or less, and particularly preferably 2.5 or less.

### [3] Rubber composition

A rubber composition according to the present embodiment of the present invention includes the above-described modified conjugated diene polymer as a rubber component. The details of the rubber composition are described below.

### [3-1] Rubber component

The rubber component included in the rubber composition of the present embodiment includes the above-described modified conjugated diene polymer one of the present embodiment of the present invention. The content of the modified conjugated diene polymer in the rubber component is preferably 20 mass% or more, more preferably 30 mass% or more, and particularly preferably 40 mass% or more. If the content of the modified conjugated diene polymer in the rubber component is below 20 mass%, the rubber composition may exhibit insufficient mechanical properties (tensile strength and tensile elongation), insufficient crack-growth resistance, and insufficient wear resistance.

The rubber component may include one or more types of the modified conjugated diene polymer. The rubber component may include a rubber component other than the modified conjugated diene polymer. Examples of the rubber component other than the modified conjugated diene polymer include a natural rubber, a synthetic isoprene rubber, a butadiene rubber, a styrene-butadiene rubber, an ethylene-α-olefin copolymer rubber, an ethylene-α-olefin-diene copolymer rubber, an acrylonitrile-butadiene copolymer rubber, a chloroprene rubber, a halogenated butylene rubber, a mixture of these, and the like. The rubber component other than the modified conjugated diene polymer may be a component that is partially polyfunctionalized (e.g., a branched structure is introduced by a treatment using a modifier such as tin tetrachloride or silicon tetrachloride).

### [3-2] Carbon black and silica

It is preferable that the rubber composition of the present embodiment further include at least one of carbon black and silica. Specific examples of the carbon black include SRF, GPF, FEF, HAF, ISAF, or SAF carbon black. It is preferable to use carbon black having an iodine adsorption (IA) of 60 mg/g or more and a dibutyl phthalate absorption (DBP) of 80 ml/100 g or more.

The effect of improving the grip performance and the fracture resistance of the rubber composition increases when using the carbon black. It is particularly preferable to use HAF, ISAF, or SAF carbon black that exhibits excellent wear resistance. The carbon black may be used either individually or in combination.

Since the modified conjugated diene polymer used for the rubber composition of the present embodiment has been modified with a specific modifier, the modified conjugated diene polymer is bonded to various functional groups on the surface of the carbon black so that the carbon black interacts with the rubber component. As a result, the dispersibility of the carbon black in the rubber composition is improved.

Specific examples of the silica include wet silica (hydrous silicic acid), dry silica (silicic acid anhydride), calcium silicate, aluminum silicate, and the like. Among these, wet silica is preferable due to the effect of improving fracture resistance while maintaining wet grip characteristics and low rolling resistance. The silica may be used either individually or in combination.

It is preferable that the rubber composition of the present embodiment include at least one of the silica and the carbon black in an amount of 20 to 120 parts by mass based on 100 parts by mass of the rubber component. It is more preferable that the rubber composition of the present embodiment include at least one of the silica and the carbon black in an amount of 25 to 100 parts by mass from the viewpoint of a reinforcement effect and an improvement in various properties. If the amount of the silica and the carbon black is low, fracture resistance and the like may not be sufficiently improved. If the amount of the silica and the carbon black is high, the processability of the rubber composition may deteriorate.

When adding the silica to the rubber composition of the present embodiment as a reinforcement filler, it is preferable to add a silane coupling agent to the rubber composition in order to further increase the reinforcement effect. Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane,

3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, and the like.

Among these, bis(3-triethoxysilylpropyl)polysulfide or 3-trimethoxysilylpropylbenzothiazyl tetrasulfide is preferable from the viewpoint of an improvement in reinforcement and the like. These silane coupling agents may be used either individually or in combination.

The amount of the silane coupling agent added is adjusted corresponding to the type of silane coupling agent. The silane coupling agent is preferably used in an amount of 1 to 20 mass%, and more preferably 3 to 15 mass%, based on 100 mass% of the silica. If the amount of the silane coupling agent is below 1 mass%, the silane coupling agent may not exhibit a sufficient coupling effect. If the amount of the silane coupling agent is exceeding 20 mass%, the rubber component may gel.

Various chemicals, additives, and the like normally used in the rubber industry may optionally be added to the rubber composition of the present embodiment insofar as the object of the present invention is not impaired. For example, a vulcanizing agent, a vulcanization assistant, a processing aid, a vulcanization accelerator, a process oil, an aging preventive, an anti-scorching agent, zinc oxide, stearic acid, and the like may be added to the rubber composition of the present embodiment.

Sulfur is normally used as the vulcanizing agent. The vulcanizing agent is preferably used in an amount of 0.1 to 3 parts by mass, and more preferably 0.5 to 2 parts by mass, based on 100 parts by mass of the raw material rubber (i.e., the rubber component). As the vulcanization assistant and the processing aid, stearic acid is normally used. The vulcanization assistant and the processing aid are used in an amount of 0.5 to 5 parts by mass based on 100 parts by mass of the raw material rubber (i.e., the rubber component).

Examples of the vulcanization accelerator include thiazole vulcanization accelerators such as M (2-mercaptobenzothiazole), DM (dibenzothiazyl disulfide), and CZ (N-cyclohexyl-2-benzothiazylsulfeneamide). The vulcanization accelerator is normally used in an amount of 0.1 to 5 parts by mass, and preferably 0.2 to 3 parts by mass, based on 100 parts by mass of the raw material rubber (i.e., the rubber component).

The rubber composition according to the present invention may be produced by kneading the raw materials using a mixer such as an open mixer (e.g., roller) or an internal mixer (e.g., Banbury mixer). The rubber composition may then be molded and vulcanized to produce a rubber product. The rubber composition of the present embodiment is suitably used in tire applications (e.g., tire tread, under-tread, carcass, sidewall, and bead) and other industrial applications (e.g., rubber vibration insulator, fender, belt, and hose). The rubber composition of the present embodiment may be particularly suitably used as a tire tread rubber or a tire sidewall rubber.

### [4] Tire member and tire

A tire member of the present invention includes the rubber composition of the present invention. Specific examples of the tire member include a tire tread, an under-tread, a carcass, a sidewall, a bead. A tire of the present invention includes the tire member of the present invention. The tire member of the present invention and the tire including the tire member of the present invention exhibit low heat build-up and excellent wear resistance.

### EXAMPLES

The present invention is further described below by way of examples. Note that the present invention is not limited to the following examples. In the examples, the unit "part" refers to "part by mass" and the unit "%" refers to "mass%" unless otherwise indicated. In the examples, various properties were measured by the following methods.

Mooney viscosity (ML₁₊₄, 100°C): The Mooney viscosity was measured using an L-rotor in accordance with JIS K 6300 (preheating time: 1 min, rotor operation time: 4 min, temperature: 100°C).

Molecular weight distribution (Mw/Mn): The molecular weight distribution (Mw/Mn) (standard polystyrene-reduced value) was measured using a gel permeation chromatograph ("HLC-8120GPC" manufactured by Tosoh Corporation) and a differential refractometer (detector) under the following conditions. The molecular weight distribution is the ratio (Mw/Mn) of the weight average molecular weight (Mw) to the number average molecular weight (Mn).
Column: "GMHHXL" manufactured by Tosoh Corporation (two columns)
Column temperature: 40°C
Mobile phase: tetrahydrofuran
Flow rate: 1.0 ml/min
Sample concentration: 10 mg/20 ml

### Microstructure (cis-1,4-bond content and 1,2-vinyl bond content):

A ¹H-NMR analysis was performed using a nuclear magnetic resonance instrument (NMR) ("JNM-EX-270" manufactured by JEOL Ltd.). The ratio of the 1,4-bond to the 1,2-bond in the polymer was calculated from the signal intensities at 5.30 to 5.50 ppm (1,4-bond) and 4.80 to 5.01 ppm (1,2-bond). The ratio of the cis-1,4-bond to the trans-1,4-bond in the polymer was calculated from the signal intensities at 27.5 ppm (cis-1,4-bond) and 32.8 ppm (trans-1,4-bond) determined by ¹³C-NMR analysis. The cis-1,4-bond content (%) and the 1,2-vinyl bond content (%) were calculated from the ratios thus calculated.

Cold flow (C/F): The cold flow (C/F) value was measured by extruding the polymer through a 1/4-inch orifice at a pressure of 3.5 lb/in² and a temperature of 50°C. The extrusion speed was measured after 10 minutes in order to achieve a stationary state. The measured value was indicated by mg/min. A smaller cold flow value indicates better storage stability.

Tensile strength (T_{B}) and elongation (E_{B}): The tensile strength and elongation were measured in accordance with JIS K 6301. The tensile strength and elongation were indicated by indices based on the measured values ("100") of the vulcanized rubber of Comparative Example 4. Higher indices indicate better tensile strength and elongation.

Low heat build-up (3%tanδ): The low heat build-up value was measured using a dynamic spectrometer (manufactured by Rheometrics Scientific Inc. (U.S.A.)) at a tensile dynamic strain of 3%, a frequency of 15 Hz, and a temperature of 50°C. The tensile strength and elongation were indicated by indices based on the measured values ("100") of the vulcanized rubber of Comparative Example 4. A higher index indicates lower heat build-up.

Wear resistance: The wear resistance was measured at room temperature using a Lambourn abrasion tester (manufactured by Shimada Giken Co., Ltd.) at a slip ratio of 60%. The wear resistance was indicated by an index based on the abrasion loss (g) ("100") of the vulcanized rubber of Comparative Example 4. A higher index indicates better wear resistance.

### Example 1 (production of modified polymer A)

A 5-liter autoclave of which the internal atmosphere was replaced by nitrogen was charged with 2.4 kg of cyclohexane and 300 g of 1,3-butadiene. A cyclohexane solution containing neodymium versatate (hereinafter referred to from time to time as "Nd(ver)₃", 0.18 mmol), a toluene solution containing methylalumoxane (hereinafter referred to from time to time as "MAO", 1.8 mmol), a toluene solution containing hydrogenated diisobutylaluminum (hereinafter referred to from time to time as "AlⁱBu₂H", 6.7 mmol), a toluene solution containing trimethylsilyl iodide (hereinafter may be referred to as "Me₃SiI", 0.36 mmol), and 1,3-butadiene in an amount five times that of neodymium (mol) were reacted and aged at 30°C for 60 minutes to obtain a catalyst composition (iodine atom/lanthanoid element-containing compound=2.0 (molar ratio)). The autoclave was charged with the catalyst composition, and the components were polymerized at 30°C for two hours.

The reaction conversion rate of 1,3-butadiene was about 100%. 200 g of the polymer solution was removed into a methanol solution containing 0.2 g of 2,4-di-t-butyl-p-cresol to terminate polymerization. After removing the solvent by steam stripping, the product was dried using a roll at 110°C to obtain an unmodified polymer (conjugated diene polymer). The cis-1,4-bond content of the conjugated diene polymer thus obtained was 99.5%. The polymerization conditions and the polymer property evaluation results are shown in Table 1.

**TABLE 1**

| | Polymerization conditions | | | | | | | | Polymer properties |
|---|---|---|---|---|---|---|---|---|---|
| | Component (h) | | Component (i) | | | | Component (j) | | cis-1,4-bond content (%) |
| | Type | Amount (mmol) | Type | Amount (mmol) | Type | Amount (mmol) | Type | Amount (mmol) | |
| Exam. 1 | Nd(Ver)₃ | 0.18 | MAO | 1.8 | AlⁱBu₂H | 6.7 | Me₃SiI | 0.36 | 99.5 |
| Exam. 2 | Nd(Ver)₃ | 0.18 | MAO | 1.8 | AlⁱBu₂H | 6.7 | Me₃SiI | 0.36 | 99.6 |
| Exam. 3 | Nd(Ver)₃ | 0.18 | MAO | 1.8 | AlⁱBu₂H | 6.7 | Me₃SiI | 0.36 | 99.4 |
| Exam. 4 | Nd(Ver)₃ | 0.18 | MAO | 1.8 | AlⁱBu₂H | 6.7 | Me₃SiI | 0.36 | 99.6 |
| Exam. 5 | Nd(Ver)₃ | 0.18 | MAO | 1.8 | AlⁱBu₂H | 6.7 | Me₃SiI | 0.36 | 99.5 |
| Exam. 6 | Nd(Ver)₃ | 0.18 | MAO | 1.8 | AlⁱBu₂H | 6.7 | Me₃SiI | 0.36 | 99.4 |
| Exam. 7 | Nd(Ver)₃ | 0.18 | MAO | 1.8 | AlⁱBu₂H | 6.7 | Me₃SiI | 0.36 | 99.3 |
| Exam. 8 | Nd(Ver)₃ | 0.18 | MAO | 1.8 | AlⁱBu₂H | 6.7 | Me₃SiI | 0.36 | 99.4 |
| Exam. 9 | Nd(Ver)₃ | 0.18 | MAO | 1.8 | AlⁱBu₂H | 6.7 | Me₃SiI | 0.36 | 99.4 |
| Comp. Exam. 1 | Nd(Ver)₃ | 0.18 | MAO | 1.8 | AlⁱBu₂H | 5.3 | Me₃SiI | 0.36 | 99.6 |
| Comp. Exam. 2 | Nd(Ver)₃ | 0.18 | MAO | 9 | AlⁱBu₂H | 3.7 | Me₃SiI | 0.36 | 97.1 |
| Comp. Exam. 3 | Nd(Ver)₃ | 0.18 | MAO | 9 | AlⁱBu₂H | 4.9 | Me₃SiI | 0.36 | 97.2 |
| Com. Exam. 4 | - | - | - | - | - | - | - | - | 94.5 |

After the addition of a toluene solution containing 3-glycidyloxypropyltrimethoxysilane (hereinafter referred to from time to time as "GPMOS", 0.37 mmol) to the remaining polymer solution maintained at 30°C, the mixture was allowed to react for 15 minutes. After the addition of dioctyltin bisoctylmaleate (hereinafter referred to from time to time as "DOTBOM", 0.18 mmol), the mixture was allowed to react for 15 minutes.

A methanol solution containing 1.5 g of 2,4-di-t-butyl-p-cresol was then added to terminate polymerization. After removing the solvent by steam stripping, the product was dried using a roll at 110°C to obtain a modified polymer A (modified conjugated diene polymer). The polymerization conditions and the modified polymer property evaluation results are shown in Table 2.

The modified conjugated diene polymer had a Mooney viscosity (ML₁₊₄ (100°C)) of 46, a molecular weight distribution (Mw/Mn) of 1.9, a cis-1,4-bond content of 99.5%, and a 1,2-vinyl bond content of 0.18%. The cold flow value of the modified conjugated diene polymer was 0.5.

**TABLE 2**

| | Modifier | | | | (Modified) polymer | Properties of (modified) polymer | | | | |
|---|---|---|---|---|---|---|---|---|---|---|
| | Type | Amount (mmol) | Type | Amount (mmol) | | Mooney viscosity ML₁₊₄ (100°C) | Molecular weight distribution (Mw/Mn) | cis-1,4-bond content (%) | 1,2-vinyl bond content (%) | Cold flow value (mg/min) |
| Exam. 1 | GPMOS | 0.37 | DOTBOM | 0.18 | A | 46 | 1.9 | 99.5 | 0.18 | 0.5 |
| Exam. 2 | DOTBOM | 0.55 | - | - | B | 43 | 2.0 | 99.6 | 0.20 | 0.8 |
| Exam. 3 | GPMOS | 0.55 | - | - | C | 41 | 2.0 | 99.4 | 0.21 | 0.9 |
| Exam. 4 | GPMOS^{*1} | 0.37 | DOTBOM^{*1} | 0.18 | D | 45 | 2.0 | 99.6 | 0.19 | 0.5 |
| Exam. 5 | IPEOS | 0.37 | DOTBOM | 0.18 | E | 47 | 1.9 | 99.5 | 0.17 | 0.4 |
| Exam. 6 | GPMOS | 0.37 | DOTDC | 0.18 | F | 43 | 1.8 | 99.4 | 0.16 | 0.6 |
| Exam. 7 | GPMOS | 0.37 | CMDI^{*2} | 0.72 | G | 52 | 2.1 | 99.3 | 0.18 | 0.2 |
| Exam. 8 | GPMOS | 0.37 | TMPPGE | 0.18 | H | 48 | 1.9 | 99.4 | 0.17 | 0.4 |
| Exam. 9 | GPMOS | 0.37 | AADE | 0.18 | I | 42 | 1.8 | 99.4 | 0.18 | 0.6 |
| Comp. Exam. 1 | - | - | - | - | J | 31 | 1.7 | 99.6 | 0.16 | 22.1 |
| Comp. Exam. 2 | - | - | - | - | K | 35 | 2.7 | 97.1 | 0.88 | 20.3 |
| Comp. Exam. 3 | GPMOS | 0.37 | DOTBOM | 0.18 | L | 48 | 3.0 | 97.2 | 0.86 | 0.5 |
| Comp. Exam. 4 | - | - | - | - | M | 45 | 4.8 | 94.5 | 2.52 | 0.6 |

| | | | | | | | | | | |
|---|---|---|---|---|---|---|---|---|---|---|
| *1 A mixed solution of GPMOS and DOTBOM was used. *2 Amount in terms of NCO. | | | | | | | | | | |

### Example 2 (production of modified polymer B)

A modified polymer B (modified conjugated diene polymer) was obtained in the same manner as in Example 1, except for adding DOTBOM (0.55 mmol) without using GPMOS. The polymerization conditions and the polymer/modified polymer property evaluation results are shown in Tables 1 and 2.

### Example 3 (production of modified polymer C)

A modified polymer C (modified conjugated diene polymer) was obtained in the same manner as in Example 1, except for adding GPMOS (0.55 mmol) without using DOTBOM. The polymerization conditions and the polymer/modified polymer property evaluation results are shown in Tables 1 and 2.

### Example 4 (production of modified polymer D)

A modified polymer D (modified conjugated diene polymer) was obtained in the same manner as in Example 1, except for using a mixed solution of GPMOS and DOTBOM. The polymerization conditions and the polymer/modified polymer property evaluation results are shown in Tables 1 and 2.

### Example 5 (production of modified polymer E)

A modified polymer E (modified conjugated diene polymer) was obtained in the same manner as in Example 1, except for using 3-isocyanatepropyltriethoxysilane (hereinafter referred to from time to time as "IPEOS") instead of GPMOS. The polymerization conditions and the polymer/modified polymer property evaluation results are shown in Tables 1 and 2.

### Example 6 (production of modified polymer F)

A modified polymer F (modified conjugated diene polymer) was obtained in the same manner as in Example 1, except for using dioctyltin dichloride (hereinafter referred to from time to time as "DOTDC") instead of DOTBOM. The polymerization conditions and the polymer/modified polymer property evaluation results are shown in Tables 1 and 2.

### Example 7 (production of modified polymer G)

A modified polymer G (modified conjugated diene polymer) was obtained in the same manner as in Example 1, except for using polymethylenepolyphenyl polyisocyanate ("PAPI*135" (manufactured by Dow Chemical Japan Ltd.), hereinafter referred to from time to time as "CMDI", 0.72 mmol in terms of NCO) instead of DOTBOM. The polymerization conditions and the polymer/modified polymer property evaluation results are shown in Tables 1 and 2.

### Example 8 (production of modified polymer H)

A modified polymer H (modified conjugated diene polymer) was obtained in the same manner as in Example 1, except for using trimethylolpropane polyglycidyl ether (hereinafter may be referred to as "TMPPGE") instead of DOTBOM. The polymerization conditions and the polymer/modified polymer property evaluation results are shown in Tables 1 and 2.

### Example 9 (production of modified polymer I)

A modified polymer I (modified conjugated diene polymer) was obtained in the same manner as in Example 1, except for using diethyl adipate (hereinafter referred to from time to time as "AADE") instead of DOTBOM. The polymerization conditions and the polymer/modified polymer property evaluation results are shown in Tables 1 and 2.

### Comparative Example 1 (production of polymer J)

A 5-liter autoclave of which the internal atmosphere was replaced by nitrogen was charged with 2.4 kg of cyclohexane and 300 g of 1,3-butadiene. A cyclohexane solution containing Nd(ver)₃ (0.18 mmol), a toluene solution containing MAO (1.8 mmol), a toluene solution containing AlⁱBu₂H (5.3 mmol), a toluene solution containing Me₃SiI (0.36 mmol), and 1,3-butadiene in an amount five times that of neodymium (mol) were reacted and aged at 30°C for 60 minutes to obtain a catalyst composition (iodine atom/lanthanoid element-containing compound=2.0 (molar ratio)). The autoclave was charged with the catalyst composition, and the components were polymerized at 30°C for two hours. The reaction conversion rate of 1,3-butadiene was about 100%.

A methanol solution containing 1.5 g of 2,4-di-t-butyl-p-cresol was then added to terminate polymerization. After removing the solvent by steam stripping, the product was dried using a roll at 110°C to obtain a polymer J (conjugated diene polymer). The polymerization conditions and the polymer property evaluation results are shown in Tables 1 and 2.

### Comparative Example 2 (production of polymer K)

A 5-liter autoclave of which the internal atmosphere was replaced by nitrogen was charged with 2.4 kg of cyclohexane and 300 g of 1,3-butadiene. A cyclohexane solution containing Nd(ver)₃ (0.18 mmol), a toluene solution containing MAO (9.0 mmol), a toluene solution containing AlⁱBu₂H (3.7 mmol), a toluene solution containing trimethylsilyl chloride (hereinafter referred to from time to time as "Me₃SiCl", 0.36 mmol), and 1,3-butadiene in an amount five times that of neodymium (mol) were reacted and aged at 30°C for 60 minutes to obtain a catalyst composition (chlorine atom/lanthanoid element-containing compound=2.0 (molar ratio)). The autoclave was charged with the catalyst composition, and the components were polymerized at 30°C for two hours.

The reaction conversion rate of 1,3-butadiene was about 100%. A methanol solution containing 1.5 g of 2,4-di-t-butyl-p-cresol was then added to terminate polymerization. After removing the solvent by steam stripping, the product was dried using a roll at 110°C to obtain a polymer K (conjugated diene polymer). The polymerization conditions and the polymer property evaluation results are shown in Tables 1 and 2.

### Comparative Example 3 (production of modified polymer L)

A 5-liter autoclave of which the internal atmosphere was replaced by nitrogen was charged with 2.4 kg of cyclohexane and 300 g of 1,3-butadiene. A cyclohexane solution containing Nd(ver)₃ (0.18 mmol), a toluene solution containing MAO (9.0 mmol), a toluene solution containing AlⁱBu₂H(4.9 mmol), a toluene solution containing Me₃SiI (0.36 mmol), and 1,3-butadiene in an amount five times that of neodymium (mol) were reacted and aged at 30°C for 60 minutes to obtain a catalyst composition (chlorine atom/lanthanoid element-containing compound=2.0 (molar ratio)). The autoclave was charged with the catalyst composition, and the components were polymerized at 30°C for two hours.

The reaction conversion rate of 1,3-butadiene was about 100%. 200 g of the polymer solution was removed into a methanol solution containing 0.2 g of 2,4-di-t-butyl-p-cresol to terminate polymerization. After removing the solvent by steam stripping, the product was dried using a roll at 110°C to obtain an unmodified polymer (conjugated diene polymer). The cis-1,4-bond content of the conjugated diene polymer thus obtained was 97.2%.

After the addition of GPMOS (0.37 mmol) to the remaining polymer solution maintained at 30°C, the mixture was allowed to react for 15 minutes. After the addition of DOTBOM (0.18 mmol), the mixture was allowed to react for 15 minutes. A methanol solution containing 1.5 g of 2,4-di-t-butyl-p-cresol was then added to terminate polymerization. After removing the solvent by steam stripping, the product was dried using a roll at 110°C to obtain a modified polymer L (modified conjugated diene polymer). The polymerization conditions and the polymer/modified polymer property evaluation results are shown in Tables 1 and 2.

### Comparative Example 4 (polymer M)

Table 1 shows the property evaluation results of a commercially available polybutadiene rubber ("BR01" manufactured by JSR Corporation).

A carbon black-containing rubber composition in which only the modified polymer was used as the rubber component (composition 1), a carbon black-containing rubber composition in which a natural rubber was also used as the rubber component (composition 2), and a carbon black-containing rubber composition in which a styrene-butadiene rubber was also used as the rubber component (composition 3), were prepared using each of the modified polymers or polymers A to M of Examples 1 to 9 and Comparative Examples 1 to 4 according to the formulation shown in Table 3. The composition was vulcanized at 145°C for 33 minutes, and the properties of the resulting vulcanized rubber were evaluated. The results are shown in Table 4.

**TABLE 3**

| Component | Composition 1 (parts) | Composition 2 (parts) | Composition 3 (parts) |
|---|---|---|---|
| (Modified) polymer A to M | 100 | 50 | 50 |
| Natural rubber | 0 | 50 | 0 |
| Styrene-butadiene rubber^{*1} | 0 | 0 | 50 |
| Carbon black^{*2} | 50 | 50 | 50 |
| Zinc oxide | 3.5 | 3.5 | 3.5 |
| Stearic acid | 2 | 2 | 2 |
| Aging preventive^{*3} | 1.5 | 1.5 | 1.5 |
| Vulcanization accelerator ^{*4} | 1.5 | 1.5 | 1.5 |
| Sulfur | 1 | 1 | 1 |

| | | | |
|---|---|---|---|
| *1 "SL563" (manufactured by JSR Corporation) *2 "Seast KH" (manufactured by Tokai Carbon Co., Ltd.) *3 N-phenyl-N'-(1,3-dimethylbutyl)-p-phenylenediamine ("Nocrac 6C" (manufactured by Ouchi Shinko Chemical Industrial Co., Ltd.)) *4 N-cyclohexyl-2-benzothiazylsulfeneamide ("Nocceler CZ" (manufactured by Ouchi Shinko Chemical Industrial Co., Ltd.)) | | | |

**TABLE 4**

| | Polymer | Composition 1 | | | | Composition 2 | | | | Composition 3 | | | |
|---|---|---|---|---|---|---|---|---|---|---|---|---|---|
| | | Tensile strength T_{B} | Elongation E_{B} | Low heat build-up 3%tanδ | Wear resistance | Tensile strength T_{B} | Elongation E_{B} | Low heat build-up 3%tanδ | Wear resistance | Tensile strength T_{B} | Elongation E_{B} | Low heat build-up 3%tanδ | Wear resistance |
| Exam. 1 | A | 131 | 115 | 113 | 137 | 106 | 103 | 107 | 129 | 105 | 104 | 104 | 126 |
| Exam. 2 | B | 129 | 119 | 112 | 135 | 107 | 104 | 106 | 127 | 104 | 102 | 105 | 121 |
| Exam. 3 | C | 128 | 116 | 112 | 133 | - | - | - | - | - | - | - | - |
| Exam. 4 | D | 132 | 114 | 113 | 138 | 107 | 102 | 104 | 131 | 105 | 106 | 107 | 125 |
| Exam. 5 | E | 129 | 116 | 111 | 129 | - | - | - | - | - | - | - | - |
| Exam. 6 | F | 128 | 117 | 109 | 137 | - | - | - | - | - | - | - | - |
| Exam. 7 | G | 130 | 114 | 114 | 134 | 104 | 105 | 107 | 128 | - | - | - | - |
| Exam. 8 | H | 130 | 118 | 110 | 135 | - | - | - | - | 104 | 108 | 108 | 125 |
| Exam. 9 | I | 128 | 117 | 112 | 134 | - | - | - | - | - | - | - | - |
| Comp. Exam. 1 | J | 130 | 116 | 111 | 136 | 107 | 104 | 106 | 127 | 106 | 105 | 104 | 124 |
| Comp. Exam. 2 | K | 112 | 104 | 105 | 109 | 103 | 101 | 104 | 105 | 102 | 102 | 102 | 106 |
| Comp. Exam. 3 | L | 118 | 106 | 107 | 116 | 104 | 102 | 105 | 109 | 103 | 104 | 106 | 107 |
| Comp. Exam. 4 | M | 100 | 100 | 100 | 100 | 100 | 100 | 100 | 100 | 100 | 100 | 100 | 100 |

As is clear from the cold flow values of Examples 1 to 9 in which the modified polymer was obtained by reacting the conjugated diene polymer having a cis-1,4-bond content of 98.5% or more and possessing an active end with a modifier including a given compound and Comparative Examples 1 and 2 in which the polymer was obtained without carrying out the modification reaction, the modified polymer obtained by the method for producing a modified conjugated diene polymer of the present invention exhibited excellent storage stability.

As is clear from the evaluation results of the compositions 1 to 3 of Comparative Example 3 in which the conjugated diene polymer having a cis-1,4-bond content of below 98.5% (i.e., 97.2%) and possessing an active end was subjected to the modification reaction to obtain a modified polymer and Comparative Example 4 using a commercially available polybutadiene rubber (cis-1,4-bond content: 94.5%), the modified polymer obtained by the method for producing a modified conjugated diene polymer of the present invention exhibited sufficiently low heat build-up and sufficiently improved wear resistance.

The modified polymers of Examples 1 to 9 exhibited a tensile strength (T_{B}) and elongation (E_{B}) higher than those of the modified polymers of Comparative Examples 2 to 4 produced using a conjugated diene polymer having a cis-1,4-bond content of below 99.2%.

### INDUSTRIAL APPLICABILITY

Since the method for producing a modified conjugated diene polymer of the present invention modifies the active end of the conjugated diene polymer with the modifier including a given compound, a modified conjugated diene polymer that exhibits excellent wear resistance, excellent mechanical properties, and reduced cold flow can be advantageously obtained.

Therefore, the rubber composition including the modified conjugated diene polymer obtained by the present invention can be used in tire applications (e.g., tire tread, under-tread, carcass, sidewall, and bead) and other industrial applications (e.g., rubber vibration insulator, fender, belt, and hose). The rubber composition is particularly suitably used as a tire tread rubber and a tire sidewall rubber.

## Claims

1. A method for producing a modified conjugated diene polymer, comprising:
carrying out a modification reaction that reacts a modifier that includes at least one compound selected from the group consisting of the following components (a) to (g) with a conjugated diene polymer having a cis-1,4-bond content of 99.2% or more and possessing an active end to introduce the modifier into the active end of the conjugated diene polymer to obtain a modified conjugated diene polymer,
the component (a) being an alkoxysilane compound that includes at least one group selected from the group consisting of an epoxy group and an isocyanate group in the molecular structure,
the component (b) being a compound shown by the general formula (1) : R¹ₙM¹X₄₋ₙ, the general formula (2): M¹X₄, the general formula (3): M¹X₃, the general formula (4) : R¹ₙM¹(R²-COOR³)₄₋ₙ, or the general formula (5) : R¹ₙM¹(R²-COR³)₄₋ₙ (wherein R¹ individually represents a hydrocarbon group having 1 to 20 carbon atoms, n represents an integer from 0 to 3, R² individually represents a hydrocarbon group having 1 to 20 carbon atoms, R³ represents a hydrocarbon group having 1 to 20 carbon atoms that may include a carbonyl group or an ester group in the side chain, M¹ represents a tin atom, a silicon atom, a germanium atom, or a phosphorus atom, and X represents a halogen atom),
the component (c) being a compound having a structure shown by the general formula (6): Y=C=Z (wherein Y represents a carbon atom, an oxygen atom, a nitrogen atom, or a sulfur atom, and Z represents an oxygen atom, a nitrogen atom, or a sulfur atom) in the molecular structure,
the component (d) being a compound having a structure shown by the following general formula (7) in the molecular structure, 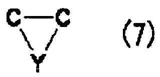 wherein Y represents an oxygen atom, a nitrogen atom, or a sulfur atom,
the component (e) being a halogenated isocyano compound,
the component (f) being a compound shown by the general formula (8): R⁴(COOH)ₘ, the general formula (9): R⁵(COX)ₘ, the general formula (10): R⁶COO-R⁷, the general formula (11): R⁸-OCOO-R⁹, the general formula (12): R¹⁰(COOCO-R¹¹)ₘ, or the following general formula (13), 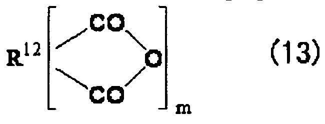 wherein R⁴ to R¹² individually represent hydrocarbon groups having 1 to 50 carbon atoms, X represents a halogen atom, and m represents an integer from 1 to 5 corresponding to the group bonded to the hydrocarbon group represented by R⁴ to R¹², and
the component (g) being a compound shown by the general formula (14): R¹³₁M²(OCOR¹⁴)₄₋₁, the general formula (15): R¹⁵₁M²(OCO-R¹⁶-COOR¹⁷)₄₋₁, or the following general formula (16), 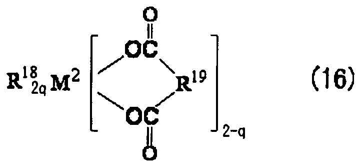 wherein R¹³ to R¹⁹ individually represent hydrocarbon groups having 1 to 20 carbon atoms, M² represents a tin atom, a silicon atom, or a germanium atom, 1 represents an integer from 0 to 3, and q represents 0 or 1.

2. The method for producing a modified conjugated diene polymer according to claim 1, wherein the conjugated diene polymer has a ratio (Mw/Mn) of the weight average molecular weight (Mw) to the number average molecular weight (Mn) determined by gel permeation chromatography of 3.5 or less.

3. The method for producing a modified conjugated diene polymer according to claim 1 or 2, wherein the conjugated diene polymer has a 1,2-vinyl bond content of 0.5% or less.

4. The method for producing a modified conjugated diene polymer according to any one of claims 1 to 3, wherein the conjugated diene polymer includes a repeating unit derived from a monomer selected from the group consisting of 1,3-butadiene, isoprene, and 2,3-dimethyl-1,3-butadiene.

5. The method for producing a modified conjugated diene polymer according to any one of claims 1 to 4, wherein the conjugated diene polymer has been polymerized in the presence of a catalyst that includes components (h) to (j) as main components,
the component (h) being a lanthanoid element-containing compound that contains at least one lanthanoid element or a reaction product obtained by reacting the lanthanoid element-containing compound with a Lewis base,
the component (i) being at least one compound selected from an alumoxane and an organoaluminum compound shown by the general formula (17): AlR²⁰R²¹R²² (wherein R²⁰ and R²¹ individually represent a hydrocarbon group having 1 to 10 carbon atoms or a hydrogen atom, and R²² represents a hydrocarbon group having 1 to 10 carbon atoms that is the same as or different from R²⁰ and R²¹), and
the component (j) being an iodine-containing compound that contains at least one iodine atom in the molecular structure.

6. A modified conjugated diene polymer produced by the method for producing a modified conjugated diene polymer according to any one of claims 1 to 5.

7. A rubber composition comprising the modified conjugated diene polymer according to claim 6 as a rubber component.

8. The rubber composition according to claim 7, further comprising at least one of carbon black and silica.

9. The rubber composition according to claim 8, wherein the rubber composition contains at least one of the carbon black and the silica in an amount of 20 to 120 parts by mass based on 100 parts by mass of the rubber component that contains the modified conjugated diene polymer in an amount of 20 mass% or more.

10. The rubber composition according to any one of claims 7 to 9, wherein the rubber component includes 20 to 100 mass% of the modified conjugated diene polymer, and 0 to 80 mass% of at least one rubber component selected from the group consisting of a natural rubber, a synthetic isoprene rubber, a butadiene rubber, a styrene-butadiene rubber, an ethylene-α-olefin copolymer rubber, an ethylene-α-olefin-diene copolymer rubber, an acrylonitrile-butadiene copolymer rubber, a chloroprene rubber, and a halogenated butyl rubber (provided that the modified conjugated diene polymer + the rubber component other than the modified conjugated diene polymer = 100 mass%).

11. A tire member comprising the rubber composition according to any one of claims 7 to 10.

12. A tire comprising the tire member according to claim 11.

## Patentansprüche

1. Verfahren zum Herstellen eines modifizierten konjugiertes-Dien-Polymers, umfassend:
Ausführen einer Modifikationsreaktion, die einen Modifizierer, der zumindest eine Verbindung ausgewählt aus der Gruppe bestehend aus den folgenden Komponenten (a) bis (g) beinhaltet, mit einem konjugiertes-Dien-Polymer, das einen cis-1,4-Bindungsgehalt von 99,2% oder mehr aufweist und ein aktives Ende besitzt, reagiert, um den Modifizierer in das aktive Ende des konjugiertes-Dien-Polymers einzuführen, um ein modifiziertes konjugiertes-Dien-Polymer zu erhalten,
wobei die Komponente (a) eine Alkoxysilanverbindung ist, die zumindest eine Gruppe ausgewählt aus der Gruppe bestehend aus einer Epoxygruppe und einer Isocyanatgruppe in der molekularen Struktur beinhaltet,
wobei die Komponente (b) eine Verbindung ist, die durch die allgemeine Formel (1): R¹ₙM¹X₄₋ₙ, die allgemeine Formel (2): M¹X₄, die allgemeine Formel (3): M¹X₃, die allgemeine Formel (4): R¹ₙM¹(R²-COOR₃)₄₋ₙ, oder die allgemeine Formel (5): R¹ₙM¹(R²-COR₃)₄₋ₙ gezeigt ist (wobei R¹ unabhängig eine Kohlenwasserstoffgruppe mit 1 bis 20 Kohlenstoffatomen darstellt, n eine ganze Zahl von 0 bis 3 darstellt, R² unabhängig eine Kohlenwasserstoffgruppe mit 1 bis 20 Kohlenstoffatomen darstellt, R³ eine Kohlenwasserstoffgruppe mit 1 bis 20 Kohlenstoffatomen darstellt, die eine Carbonylgruppe oder eine Estergruppe in der Seitenkette beinhalten kann, M¹ ein Zinnatom, ein Siliziumatom, ein Germaniumatom oder ein Phosphoratom darstellt, und X ein Halogenatom darstellt),
wobei die Komponente (c) eine Verbindung ist, die eine Struktur, die durch die allgemeine Formel (6): Y=C=Z gezeigt ist (wobei Y ein Kohlenstoffatom, ein Sauerstoffatom, ein Stickstoffatom oder ein Schwefelatom darstellt, und Z ein Sauerstoffatom, ein Stickstoffatom oder ein Schwefelatom darstellt), in der molekularen Struktur aufweist,
wobei die Komponente (d) eine Verbindung ist, die eine Struktur, die durch die folgende allgemeine Formel (7) gezeigt ist, in der molekularen Struktur aufweist, 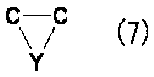 wobei Y ein Sauerstoffatom, ein Stickstoffatom oder ein Schwefelatom darstellt,
wobei die Komponente (e) eine halogenierte Isocyanoverbindung ist,
wobei die Komponente (f) eine Verbindung ist, die durch die allgemeine Formel (8): R⁴(COOH)ₘ, die allgemeine Formel (9): R⁵(COX)ₘ, die allgemeine Formel (10): R⁶COO-R⁷, die allgemeine Formel (11): R⁸-OCOO-R⁹, die allgemeine Formel (12): R¹⁰(COOCO-R¹¹)ₘ, oder die folgende allgemeine Formel (13) gezeigt ist, 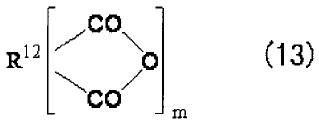 wobei R⁴ bis R¹² unabhängig Kohlenwasserstoffgruppen mit 1 bis 50 Kohlenstoffatomen darstellen, X ein Halogenatom darstellt, und m eine ganze Zahl von 1 bis 5 darstellt, entsprechend zu der Gruppe, die zu der durch R⁴ bis R¹² dargestellten Kohlenwasserstoffgruppe bindet, und
wobei die Komponente (g) eine Verbindung ist, die durch die allgemeine Formel (14): R¹³_{I}M²(OCOR¹⁴)_{4-I}, die allgemeine Formel (15): R¹⁵_{I}M²(OCO-R¹⁶-COOR¹⁷)_{4-I}, oder die folgende allgemeine Formel (16) gezeigt ist, 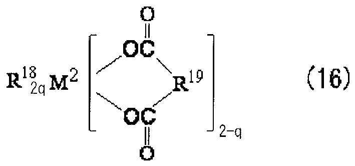 wobei R¹³ bis R¹⁹ unabhängig Kohlenwasserstoffgruppen mit 1 bis 20 Kohlenstoffatomen darstellen, M² ein Zinnatom, ein Siliziumatom oder ein Germaniumatom darstellt, I eine ganze Zahl von 0 bis 3 darstellt, und q 0 oder 1 darstellt.

2. Verfahren zum Herstellen eines modifizierten konjugiertes-Dien-Polymers nach Anspruch 1, wobei das konjugiertes-Dien-Polymer ein Verhältnis (Mw/Mn) des gewichtsgemittelten Molekulargewichts (Mw) zu dem zahlengemittelten Molekulargewicht (Mn), bestimmt durch Gel-Permeations-Chromatographie, von 3,5 oder weniger aufweist.

3. Verfahren zum Herstellen eines modifizierten konjugiertes-Dien-Polymers nach Anspruch 1 oder 2, wobei das konjugiertes-Dien-Polymer einen 1,2-Vinylbindungsgehalt von 0,5% oder weniger aufweist.

4. Verfahren zum Herstellen eines modifizierten konjugierten Dien-Polymers nach einem der Ansprüche 1 bis 3, wobei das konjugiertes-Dien-Polymer eine Wiederholungseinheit beinhaltet, die von einem Monomer stammt, das ausgewählt ist aus der Gruppe bestehend aus 1,3-Butadien, Isopren und 2,3-Dimethyl-1,3-butadien ausgewählt.

5. Verfahren zum Herstellen eines modifizierten konjugiertes-Dien-Polymers nach einem der Ansprüche 1 bis 4, wobei das konjugiertes-Dien-Polymer in der Gegenwart eines Katalysators, der die Komponenten (h) bis (j) als Hauptkomponenten beinhaltet, polymerisiert worden ist,
wobei die Komponente (h) eine Lanthanoidelement-enthaltende Verbindung ist, die zumindest ein Lanthanoidelement oder ein Reaktionsprodukt enthält, das durch Reagieren der Lanthanoidelemententhaltenden Verbindung mit einer Lewis-Base erhalten ist,
wobei die Komponente (i) zumindest eine Verbindung ist, die aus einer Alumoxan und einer Organoaluminiumverbindung ausgewählt ist, die durch die allgemeine Formel (17): AlR²⁰R²¹R²² gezeigt ist (wobei R²⁰ und R²¹ unabhängig eine Kohlenwasserstoffgruppe mit 1 bis 10 Kohlenstoffatomen oder ein Wasserstoffatom darstellen, und R²² eine Kohlenwasserstoffgruppe mit 1 bis 10 Kohlenstoffatomen darstellt, die das Gleiche wie oder unterschiedlich von R²⁰ und R²¹ ist), und
wobei die Komponente (j) eine Jod-enthaltende Verbindung ist, die zumindest ein Jodatom in der molekularen Struktur enthält.

6. Modifiziertes konjugiertes-Dien-Polymer, das durch das Verfahren zum Herstellen eines modifizierten konjugiertes-Dien-Polymers nach einem der Ansprüche 1 bis 5 hergestellt ist.

7. Gummizusammensetzung, die das modifizierte konjugiertes-Dien-Polymer nach Anspruch 6 als einen Gummikomponente umfasst.

8. Gummizusammensetzung nach Anspruch 7, die ferner zumindest eines aus Kohlenstoffschwarz und Silica umfasst.

9. Gummizusammensetzung nach Anspruch 8, wobei die Gummizusammensetzung zumindest eines aus dem Kohlenstoffschwarz und dem Silica in einer Menge von 20 bis 120 Massenteile basierend auf 100 Massenteilen der Gummikomponente enthält, die das modifizierte konjugiertes-Dien-Polymer in einer Menge von 20 Massen-% oder mehr enthält.

10. Gummizusammensetzung nach einem der Ansprüche 7 bis 9, wobei die Gummikomponente 20 bis 100 Massen-% des modifizierten konjugiertes-Dien-Polymers und 0 bis 80 Massen-% von zumindest einer Gummikomponente ausgewählt aus der Gruppe bestehend aus einem Naturgummi, einem synthetischen Isoprengummi, einem Butadiengummi, einem Styrol-Butadiengummi, einem Ethylen-α-Olefin-Copolymergummi, einem Ethylen-α-Olefin-Dien-Copolymergummi, einem Acrylonitril-Butadien-Copolymergummi, einem Chloroprengummi, und einem halogenierten Butylgummi enthält (vorausgesetzt, dass das modifizierte konjugiertes-Dien-Polymer + die Gummikomponente, die sich von dem modifizierten konjugiertes-Dien-Polymer unterscheidet = 100 Massen-%).

11. Reifenelement, das die Gummizusammensetzung nach einem der Ansprüche 7 bis 10 umfasst.

12. Reifen, der das Reifenelement nach Anspruch 11 umfasst.

## Revendications

1. Procédé de production d'un polymère de diène conjugué modifié, comprenant :
l'exécution d'une réaction de modification qui fait réagir un modificateur qui inclut au moins un composé choisi parmi le groupe consistant en les composants (a) à (g) suivants avec un polymère de diène conjugué ayant une teneur en liaison cis-1,4 de 99,2% ou plus et possédant une terminaison active pour introduire le modificateur dans la terminaison active du polymère de diène conjugué pour obtenir un polymère de diène conjugué modifié,
le composant (a) étant un composé alcoxysilane qui inclut au moins un groupe choisi parmi le groupe consistant en un groupe époxy et un groupe isocyanate dans la structure moléculaire,
le composant (b) étant un composé montré par la formule générale (1) : R¹ₙM¹X₄₋ₙ, la formule générale (2) : M¹X₄, la formule générale (3) : M¹X₃, la formule générale (4) : R¹ₙM¹(R²-COOR³)₄₋ₙ, ou la formule générale (5) : R¹ₙM¹(R²-COR³)₄₋ₙ (dans lesquelles R¹ représente individuellement un groupe hydrocarbure ayant 1 à 20 atomes de carbone, n représente une entier de 0 à 3, R² représente individuellement un groupe hydrocarbure ayant 1 à 20 atomes de carbone, R³ représente un groupe hydrocarbure ayant 1 à 20 atomes de carbone qui peut inclure un groupe carbonyle ou un groupe ester dans la chaîne latérale, M¹ représente un atome d'étain, un atome de silicium, un atome de germanium, ou un atome de phosphore, et X représente un atome d'halogène),
le composant (c) étant un composé ayant une structure montrée par la formule générale (6) : Y=C=Z (dans laquelle Y représente un atome de carbone, un atome d'oxygène, un atome d'azote, ou un atome de soufre, et Z représente un atome d'oxygène, un atome d'azote, ou un atome de soufre) dans la structure moléculaire,
le composant (d) étant un composé ayant une structure montrée par la formule générale (7) suivante dans la structure moléculaire, 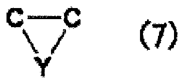
dans laquelle Y représente un atome d'oxygène, un atome d'azote, ou un atome de soufre,
le composant (e) étant un composé isocyano halogéné,
le composant (f) étant un composé montré par la formule générale (8) : R⁴(COOH)ₘ, la formule générale (9) : R⁵(COX)ₘ, la formule générale (10) : R⁶COO-R⁷, la formule générale (11) : R⁸-OCOO-R⁹, la formule générale (12) : R¹⁰(COOCO-R¹¹)ₘ, ou la formule générale (13) suivante, 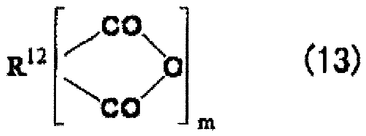
dans lesquelles R⁴ à R¹² représentent individuellement des groupes hydrocarbure ayant 1 à 50 atomes de carbone, X représente un atome d'halogène, et m représente un entier de 1 à 5 correspondant au groupe lié au groupe hydrocarbure représenté par R⁴ à R¹², et
le composant (g) étant un composé montré par la formule générale (14) : R¹³₁M²(OCOR¹⁴)₄₋₁, la formule générale (15) : R¹⁵₁M²(OCO-R¹⁶-COOR¹⁷) ₄₋₁, ou la formule générale (16) suivante : 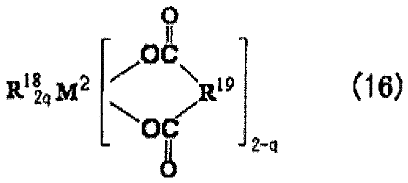
dans lesquelles R¹³ à R¹⁹ représentent individuellement des groupes hydrocarbure ayant 1 à 20 atomes de carbone, M² représente un atome d'étain, un atome de silicium, ou un atome de germanium, 1 représente un entier de 0 à 3, et q représente 0 ou 1.

2. Procédé de production d'un polymère de diène conjugué modifié selon la revendication 1, dans lequel le polymère de diène conjugué a un rapport (Mw/Mn) du poids moléculaire moyen en poids (Mw) sur le poids moléculaire moyen en nombre (Mn) déterminé par chromatographie par perméation de gel de 3,5 ou moins.

3. Procédé de production d'un polymère de diène conjugué modifié selon la revendication 1 ou 2, dans lequel le polymère de diène conjugué a une teneur en liaison 1,2-vinyle de 0,5% ou moins.

4. Procédé de production d'un polymère de diène conjugué modifié selon l'une quelconque des revendications 1 à 3, dans lequel le polymère de diène conjugué inclut une unité répétitive dérivée d'un monomère choisi parmi le groupe consistant en le 1,3-butadiène, l'isoprène, et le 2,3-diméthyl-1,3-butadiène.

5. Procédé de production d'un polymère de diène conjugué modifié selon l'une quelconque des revendications 1 à 4, dans lequel le polymère de diène conjugué a été polymérisé en présence d'un catalyseur qui inclut des composants (h) à (j) comme composants principaux,
le composant (h) étant un composé contenant un élément des lanthanides qui contient au moins un élément des lanthanides ou un produit de réaction obtenu en faisant réagir le composé contenant un élément des lanthanides avec une base de Lewis,
le composant (i) étant au moins un composé choisi parmi un alumoxane et un composé organoaluminium montré par la formule générale (17) : AlR²⁰R²¹R²² (dans laquelle R²⁰ et R²¹ représentent individuellement un groupe hydrocarbure ayant 1 à 10 atomes de carbone ou un atome d'hydrogène, et R²² représente un groupe hydrocarbure ayant 1 à 10 atomes de carbone qui est identique à ou différent de R²⁰ et R²¹), et
le composant (j) étant un composé contenant de l'iode qui contient au moins un atome d'iode dans la structure moléculaire.

6. Polymère de diène conjugué modifié produit par le procédé de production d'un polymère de diène conjugué modifié selon l'une quelconque des revendications 1 à 5.

7. Composition de caoutchouc comprenant le polymère de diène conjugué modifié selon la revendication 6 comme un composant caoutchouc.

8. Composition de caoutchouc selon la revendication 7, comprenant en outre au moins un parmi un noir de carbone et une silice.

9. Composition de caoutchouc selon la revendication 8, dans laquelle la composition de caoutchouc contient au moins un parmi le noir de carbone et la silice dans une quantité de 20 à 120 parties en masse sur la base de 100 parties en masse du composant caoutchouc qui contient le polymère de diène conjugué modifié dans une quantité de 20% en masse ou plus.

10. Composition de caoutchouc selon l'une quelconque des revendications 7 à 9, dans laquelle le composant caoutchouc inclut 20 à 100% en masse du polymère de diène conjugué modifié, et 0 à 80% en masse d'au moins un composant caoutchouc choisi parmi le groupe consistant en un caoutchouc naturel, un caoutchouc isoprène synthétique, un caoutchouc butadiène, un caoutchouc styrène-butadiène, un caoutchouc copolymère d'éthylène-α-oléfine, un caoutchouc copolymère d'éthylène-α-oléfine-diène, un caoutchouc copolymère d'acrylonitrile-butadiène, un caoutchouc chloroprène et un caoutchouc butylique halogéné (sous réserve que le polymère de diène conjugué modifié + le composant caoutchouc autre que le polymère de diène conjugué modifié = 100% en masse).

11. Élément de pneumatique comprenant la composition de caoutchouc selon l'une quelconque des revendications 7 à 10.

12. Pneumatique comprenant l'élément de pneumatique selon la revendication 11.
